# EUROPEAN PATENT APPLICATION

(11) **EP 2 116 970 A1**
(43) Date of publication of application: **11.11.2009**
(21) Application number: 08828998.8
(22) Date of filing: 19.08.2008
(51) Int. Cl.: G06T 1/00, G06F 17/30, H04N 5/91, H04N 5/93

(54) **IMAGE SELECTING DEVICE, IMAGE SELECTING METHOD AND PROGRAM**

(30) Priority: 05.09.2007 JP 2007230685; 10.07.2008 JP 2008180317
(71) Applicant: Sony Corporation, Tokyo 108-0075 (JP)
(72) Inventor: KIMURA, Takaomi, Tokyo 108-0075 (JP); KOJIMA, Tamaki, Tokyo 108-0075 (JP); MOCHIZUKI, Daisuke, Tokyo 108-0075 (JP); GOTOH, Tomohiko, Tokyo 108-0075 (JP); MASUDA, Takafumi, Tokyo 108-0075 (JP)
(74) Representative: Tyson, Robin Edward
(86) International application number: PCT/JP2008/064733
(87) International publication number: WO 2009/031402

(57) **Abstract**

There is provided an image selection apparatus, an image selection method and a program. The image selection apparatus includes a selection number designation portion to designate a selection number of images, an image analysis portion 228 to analyze a plurality of images and extract a feature amount of each image, a first selection portion to select at least the selection number of images from the plurality of images based on the feature amount of each image extracted by the image analysis portion, a second selection portion to select images from the plurality of images by a given method different from a method of the first selection portion, and a selection control portion to cause the second selection portion, rather than the first selection portion, to select images if the selection number is larger than a first set number.

## Description

### Technical Field

The present invention relates to an image selection apparatus, an image selection method and a program.

### Background Art

Digital cameras are widely used today, and editing of a photographic image captured by a digital camera on a PC (Personal Computer), execution of a slideshow that sequentially displays photographic images on a display apparatus and so on are popularly performed.

In the slideshow, music can be played while images are displayed. For example, a slideshow that plays back music repeatedly until the last photographic image of a plurality of target photographic images is displayed, a slideshow that sequentially displays photographic images during a playback time of one song are possible. In the latter case, because there is a limit to the number of photographic images which can be displayed within a playback time of one song, if the population of photographic images which a user wishes to include in a slideshow exceeds the limit, it is necessary to select the number of photographic images which is below the limit from the population.

As a method of selecting photographic images, there is a method of random selection; however, such a method fails to select appropriate photographic images in some cases. For example, assume the case where the population of photographic images includes the photographic images which are shot in a variety of events, and a user wishes to select the photographic images which are shot in different events. However, in the random selection method, there are cases where the photographic images which are shot in the same event are mostly selected. Such an issue becomes increasingly prominent because the case where there are many photographic images having the same composition would often exist with the widespread use of digital cameras and the inclusion of a continuous shooting function into digital cameras. Besides the slideshow, the similar issue occurs in the case where it is intended to display thumbnail images of photographs within a prescribed range, that is, to display a fixed number of photographic images within a limited space, for example.

In light of this, a selection method that prevents imbalanced selection of similar photographic images by analyzing the similarity of photographic images is possible as described in the patent document 1, for example.

[Patent Document 1] Japanese Unexamined Patent Publication No. 2007-206919

### Disclosure of the Invention

### Problems to be Solved by the Invention

However, because a processing load for analysis of the similarity of photographic images is generally heavy, a processing load becomes excessively large as the number of photographic images to be finally selected increases in the existing selection method.

The present invention has been accomplished to solve the above problem and an object of the present invention is thus to provide novel and improved image selection apparatus, image selection method and program which are capable of performing image selection processing according to the number of photographic images to be finally selected.

### Means for solving the problems

In order to solve the above problem, according to an aspect of the present invention, there is provided an image selection apparatus which includes a selection number designation portion to designate a selection number of images, an image analysis portion to analyze a plurality of images and extract a feature amount of each image, a first selection portion to select at least the selection number of images from the plurality of images based on the feature amount of each image extracted by the image analysis portion, a second selection portion to select images from the plurality of images by a given method different from a method of the first selection portion, and a selection control portion to cause the second selection portion, rather than the first selection portion, to select images if the selection number is larger than a first set number.

In this configuration, because the first selection portion performs image selection based on the feature amount of each image, the first selection portion can select at least the selection number of images respectively having a relatively low degree of similarity, for example, from the plurality of images. On the other hand, because the first selection portion performs image selection based on the feature amount of each image as described above, a processing load in the first selection portion can be excessively large as the selection number increases. In view of this, if the selection number is larger than the first set number, the selection control portion causes the second selection portion which selects images from the plurality of images by a given method different from a method of the first selection portion, rather than the first selection portion, to perform image selection, thereby reducing a processing load for image selection in the image selection apparatus. Accordingly, in the image selection apparatus, the second selection portion performs image selection when the selection number is larger than the first set number to thereby reduce a processing load, and the first selection portion performs image selection when the selection number is smaller than a first set number to thereby select images in consideration of the similarity.

If the selection number is smaller than the first set number, the selection control portion may cause the first selection portion to select at least the selection number of images and then cause the second selection portion to select the selection number of images from at least the selection number of images. In this configuration, the first selection portion performs image selection based on the feature amount of each image, and the second selection portion performs image selection using another method. Accordingly, the image selection apparatus can select the selection number of images from the plurality of images in consideration of another factor in combination with the feature amount of each image.

The second selection portion may randomly select the selection number of images from at least the selection number of images. In this configuration, the image selection apparatus can select the selection number of different images in consideration of the degree of similarity of the respective images each time performing image selection from the plurality of images.

The first selection portion may select the number of images designated based on the selection number and a prescribed index from the plurality of images. In this configuration, because the second selection portion selects the selection number of images from the images selected by the first selection portion, as a difference between the number of images selected by the first selection portion and the selection number is larger, the randomness of the images selected by the second selection portion is higher. Further, because the number of images to be selected by the first selection portion is specified based on the selection number and a prescribed index, the randomness of the images selected by the second selection portion can be increased or decreased by adjusting the prescribed index.

The image selection apparatus may further include a third selection portion to classify a prescribed set of images into groups composed of images whose shooting time interval is shorter than a set interval value and select at least one image from each of the groups, and the plurality of images may be included in a set of images selected by the third selection portion. The images whose shooting time interval is shorter than the set interval value, such as one second or two seconds, are likely to be shot in the similar location and have the similar composition. Therefore, the third selection portion classifies a prescribed set of images into groups composed of images whose shooting time interval is shorter than a set interval value and selects at least one image from each of the groups, thereby reducing the possibility of selecting the images with a high degree of similarity.

The image selection apparatus may further include a fourth selection portion to classify the set of images selected by the third selection portion into a plurality of groups according to dispersion of shooting time of each image included in the set of images and select at least one image from each of the groups as the plurality of images. Each of the plurality of groups which are classified according to dispersion of shooting time is likely to include the images shot under the circumstances where the environment such as a location and an event is similar. Therefore, the fourth selection portion classifies the set of images selected by the third selection portion into a plurality of groups according to dispersion of the shooting time of each image included in the set of images and selects at least one image from each of the groups as the plurality of images, thereby selecting the plurality of images which include images shot under different circumstances at a high proportion.

If the number of images included in the set of images selected by the third selection portion is larger than a second set number, the selection control portion may cause the second selection portion, rather than the fourth selection portion, to select images. As described above, the fourth selection portion can select a plurality of images which include images shot under different circumstances at a high proportion. On the other hand, because the fourth selection portion performs image selection in consideration of dispersion of the shooting time of each image, as the number of images included in the set of images selected by the third selection portion increases, a processing load in the fourth selection portion increases. Therefore, if the number of images included in the set of images selected by the third selection portion is larger than a second set number, the selection control portion causes the second selection portion, rather than the fourth selection portion, to select images, thereby reducing a processing load for image selection in the image selection apparatus.

If the number of images included in the set of images selected by the third selection portion is smaller than the number designated based on the selection number and a prescribed index, the selection control portion may cause the first selection portion to select the selection number of images from the images included in the set of images selected by the third selection portion.

The image selection apparatus may further include a music playback portion to play back music, a layout control portion to set a display pattern of an image for each of one or two or more durations forming music, an image display portion to display an image, and a display control portion to cause images selected based on control by the selection control portion to be displayed sequentially according to the display pattern set to a duration including a music playback position by the music playback portion.

The layout control portion may separate the music into one or two or more durations according to a rule corresponding to mood of the music and set a display pattern corresponding to mood of the music to the one or two or more durations.

The layout control portion may place an image containing the largest number of faces in the last place among the images selected based on control by the selection control portion.

The image selection apparatus may further include a playback duration setting portion to set a playback duration of music, and the selection number designation portion may designate the selection number of images based on the number of images necessary for display during playback in the playback duration.

The playback duration setting portion may temporarily set a duration with its center at a start position of an impressive part of music, and if a start point and an end point of the duration are not the first beat, the playback duration setting portion may extend the start point and the end point respectively back and forward to the first beat and set the playback duration.

If a composition change point at which a component of music changes exists in a given range from the start point or a given range from the end point, the playback duration setting portion may further update the start point or the end point to the composition change point and set the playback duration.

The display pattern may include at least one of switching timing of images and an effect applied to an image.

The layout control portion may make control in such a way that fade-in of an image ends at a chord change point when switching images based on chord progression of music.

Further, in order to solve the above problem, according to another embodiment of the present invention, there is provided an image selection method which includes a step of designating a selection number of images, a step of determining whether the selection number is larger than a first set number, a step of analyzing a plurality of images to extract a feature amount of each image and selecting at least the selection number of images from the plurality of images based on the feature amount of each image if the selection number is determined to be smaller than the first set number, and a step of selecting images from the plurality of images by another given method without using the feature amount of each amount if the selection number is determined to be larger than the first set number.

Further, in order to solve the above problem, according to another embodiment of the present invention, there is provided a program for causing a computer to function as an image selection apparatus which includes a selection number designation portion to designate a selection number of images, an image analysis portion to analyze a plurality of images and extract a feature amount of each image, a first selection portion to select at least the selection number of images from the plurality of images based on the feature amount of each image extracted by the image analysis portion, a second selection portion to select images from the plurality of images by a given method different from a method of the first selection portion, and a selection control portion to cause the second selection portion, rather than the first selection portion, to select images if the selection number is larger than a first set number.

The above program can cause a hardware resource of a computer including CPU, ROM, RAM or the like to execute the functions of the first selection portion, the second selection portion and the selection control portion described above. It is therefore possible to cause a computer that implements the program to function as the above-described image selection apparatus.

### Advantages of the Invention

As described above, the image selection apparatus, the image selection method and the program according to the present invention are capable of performing image selection processing according to the number of photographic images to be finally selected.

### Brief Description of the Drawings

[FIG. 1] An explanatory view showing the configuration of an image selection system according to a first embodiment.
[FIG. 2] An explanatory view showing an example of images taken by a photographing apparatus.
[FIG. 3] An explanatory view showing an example of a result of random image selection.
[FIG. 4] A block diagram showing the hardware configuration of a PC.
[FIG. 5] A functional block diagram showing the configuration of a PC according to the first embodiment.
[FIG. 6] An explanatory view showing an example of parameters which are used in a selection control portion and an image selection portion.
[FIG. 7] An explanatory view schematically showing processing by an image selection portion.
[FIG. 8] An explanatory view showing an example of a result of image selection by a continuous shooting determination and selection portion.
[FIG. 9] An explanatory view showing the way of classifying selection target images into a plurality of groups by an event determination and selection portion.
[FIG. 10] An explanatory view showing an example of a result of image selection by the event determination and selection portion.
[FIG. 11] An explanatory view showing an example of a result of image selection by a similarity determination and selection portion.
[FIG. 12] An explanatory view showing the way of selecting a final selection number of images.
[FIG. 13] A flowchart showing the flow of an image selection method executed in a PC according to the first embodiment.
[FIG. 14] A functional block diagram showing the configuration a PC according to a second embodiment.
[FIG. 15] A flowchart showing the flow until a music analysis portion acquires a music feature amount.
[FIG. 16] An explanatory view showing an example of a music composition.
[FIG. 17] A flowchart schematically showing a series of processing to create a slideshow with music.
[FIG. 18] An explanatory view showing an exemplary composition of a configuration dialog.
[FIG. 19] A flowchart showing the flow of processing to set a highlight part of music by a playback duration setting portion.
[FIG. 20] An explanatory view showing a state from fade-in to fade-out for each effect type.
[FIG. 21] A flowchart showing the flow of automatic selection of a layout and an effect according to mood.
[FIG. 22] An explanatory view showing an example of selection of effect patterns.
[FIG. 23] An explanatory view showing the way that an effect parameter is set to each image display frame.
[FIG. 24] An explanatory view showing an example of setting of a layout and an effect for each mood.
[FIG. 25] An explanatory view showing an example of setting of a layout and an effect for each mood.
[FIG. 26] An explanatory view showing the relationship of dominants in music progression.
[FIG. 27] An explanatory view showing the relationship between a chord change point and an image display frame.

### Best Modes for Carrying Out the Invention

Hereinafter, preferred embodiments of the present invention will be described in detail with reference to the appended drawings. Note that, structural elements that have substantially the same function and structure are denoted with the same reference numerals, and repeated explanation is omitted.

"Preferred embodiments of the present invention" will be described in the following order:
(1) Outline of the image selection system according to a first embodiment
(2) Objective of the first embodiment
(3) Explanation of the PC according to the first embodiment
   (3-1) Hardware configuration of the PC
   (3-2) Function of the PC
   (3-3) Operation of the PC
(4) Second embodiment
   (4-1) Circumstances of development of a second embodiment
   (4-2) Explanation of the PC according to the second embodiment
   (4-3) Supplemental explanation to the second embodiment
(5) Summary

### (1) Outline of the image selection system according to a first embodiment

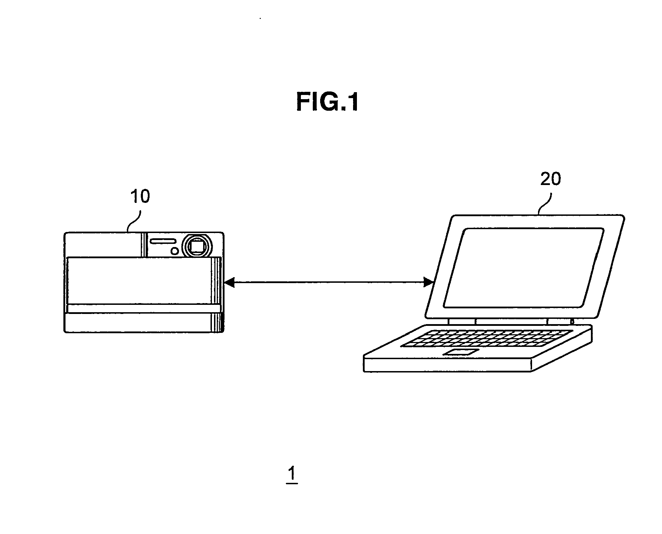

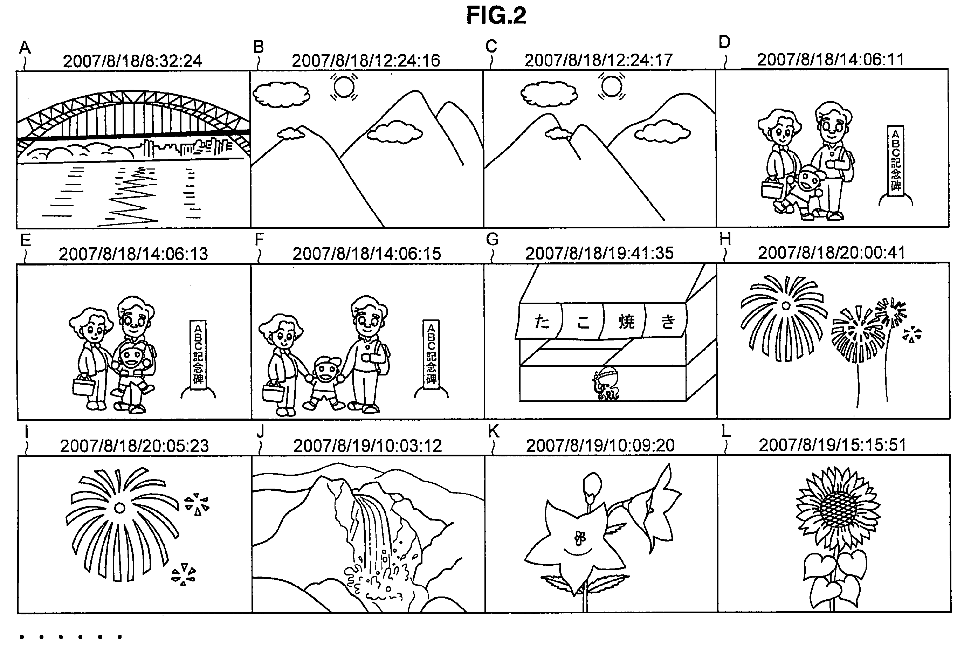

The outline of an image selection system 1 according to a first embodiment is described hereinafter with reference to FIGS. 1 and 2.

FIG. 1 is an explanatory view showing the configuration of the image selection system 1 according to the first embodiment. As shown in FIG. 1, the image selection system 1 includes a photographing apparatus 10 and a PC (Personal Computer) 20.

The photographing apparatus 10 converts an image such as a still image and a moving image which is collected in the photographing apparatus 10 into an electric signal using a semiconductor device and then records the electric signal in digital format onto a storage medium that is built in the photographing apparatus 10. Although the photographing apparatus 10 can take an image such as a still image and a moving image as described above, an image mainly indicates a still image in the description of this embodiment unless otherwise noted. FIG. 2 shows an example of images which are taken by the photographing apparatus 10.

FIG. 2 is an explanatory view showing an example of images which are taken by the photographing apparatus 10. In this example, it is assumed that the images as shown in FIG. 2 are shot during a certain family's travel. As shown in FIG. 2, the photographing apparatus 10 can take a plurality of images and store each image in association with shooting time into a storage medium. The shooting time may be recorded as EXIF (Exchangeable Image File Format) information.

Specifically, an image A whose subject is a bridge is shot at "2007/8/18/8:32:24", and images B and C whose subject is a mountain are shot at "2007/8/18/12:24:16" and "2007/8/18/12:24:17", respectively. Further, images D to F whose subject is the family is shot at "2007/8/18/14:06:11", "2007/8/18/14:06:13" and "2007/8/18/14:06:15", respectively.

Although continuous shooting at an interval of two seconds or the like, such as the images D to F, may be performed manually, it may be performed automatically using a continuous shooting function that makes the photographing apparatus 10 continuously shoot images automatically according to one-time shooting direction. The continuous shooting function is advantageous in that a user can select the most favorite image from continuously shot images.

Likewise, the case where an image G whose subject is an open-air food stall, images H and I whose subject is fireworks, an image J whose subject is a river and images K and L whose subject is a flower are taken by the photographing apparatus 10 is shown in FIG. 2.

The PC 20 of this embodiment, which constitutes the image selection system 1, selects a certain number of images from a set of images that are taken by the photographing apparatus 10 as described above. The selection of images is assumed to be performed in a variety of situations, such as when executing a slideshow that displays images by switching them at a given interval during a certain song and when laying out images within a limited space. The PC 20 according to this embodiment, which functions as the image selection apparatus, can implement image selection processing according to the number of images to be finally selected, as described in detail later.

Although FIG. 1 illustrates the PC 20 as an example of the image selection apparatus, the image selection apparatus is not limited thereto. For example, the image selection apparatus may be information processing apparatus such as a home video processing unit (a DVD recorder, a videocassette recorder etc.), a cellular phone, a PHS (Personal Handyphone System), a portable sound playback unit, a portable video processing unit, a PDA (Personal Digital Assistants), a home game device, a portable game device, an electrical household appliance and a printer. Further, the photographing apparatus 10 may have an image selection function that selects a certain number of images from the set of images. Furthermore, the function as the image selection apparatus, which is incorporated into the PC 20, may be incorporated into a server located on a network. Specifically, a server located on a network may perform image selection from a set of images in response to a request from a client device and notify the client device of an image selection result.

### (2) Objective of the first embodiment

The image selection system 1 according to the first embodiment is schematically described in the foregoing. Next, the objective of the embodiment is described hereinbelow.

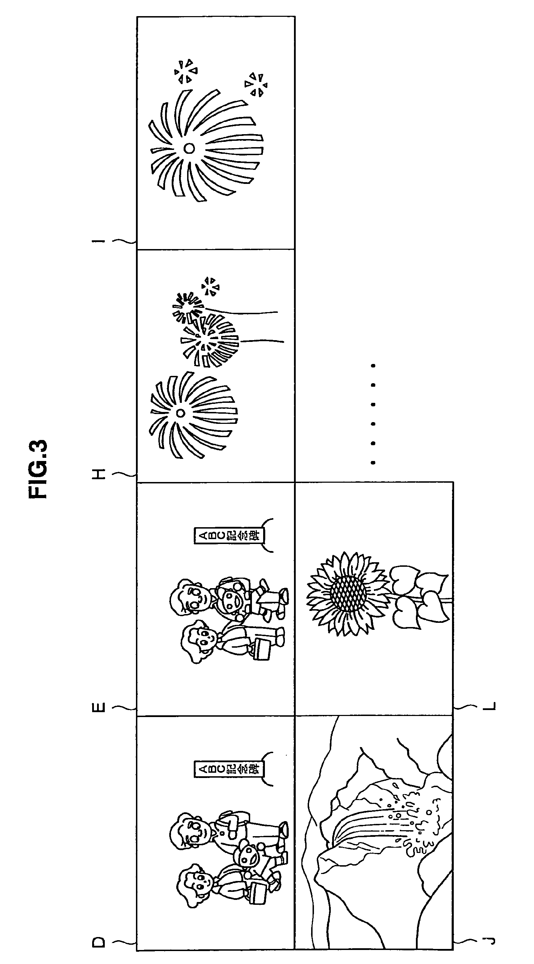

When selecting a certain number of images from a set of images shown in FIG. 2, for example, a method that selects images randomly is possible, in a simple manner. In such a case, the images shown in FIG. 3 are selected, for example.

FIG. 3 is an explanatory view showing an example of a result of random image selection. As shown in FIG. 3, in random image selection, there are cases where a plurality of similar images are selected and a unique image included in a set of images is not selected. Specifically, the images whose subject and composition are similar to each other, such as the selected images D and E and images H and I, can be selected in some cases.

However, it is advantageous to select a small number of similar images and the largest possible number of images each having uniqueness in terms of allowing a user who looks at the selected images to obtain a larger amount of information.

In view of this, a selection method that prevents imbalanced selection of similar photographic images by analyzing the similarity of images is possible. However, because a processing load for analyzing the similarity of images is generally heavy, such a selection method has a problem that a processing load becomes excessively large as the number of images to be finally selected increases.

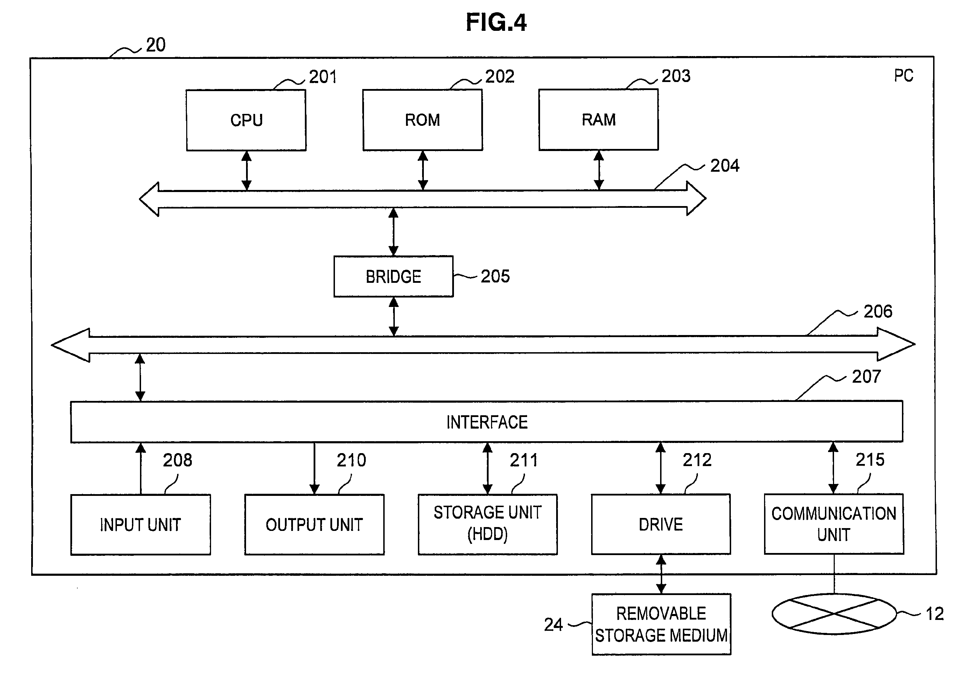

Given such circumstances, the PC 20 according to this embodiment, which functions as the image selection apparatus, has been invented. The PC 20 according to this embodiment is capable of performing image selection processing in accordance with the number of images to be finally selected. The PC 20 is described hereinafter in detail with reference to FIGS. 4 to 13.

### (3) Explanation of the PC according to the first embodiment (3-1) Hardware configuration of the PC

FIG. 4 is a block diagram showing the hardware configuration of the PC 20. The PC 20 includes a CPU (Central Processing Unit) 201, a ROM (Read Only Memory) 202, a RAM (Random Access Memory) 203, a host bus 204, a bridge 205, an external bus 206, an interface 207, an input unit 208, an output unit 210, a storage unit (HDD) 211, a drive 212, and a communication unit 215.

The CPU 201 functions as a processing unit and a control unit, and it controls the overall operation in the PC 20 according to various kinds of programs. The CPU 201 may be a microprocessor. The ROM 202 stores a program to be used by the CPU 201, a processing parameter and so on. The RAM 203 primarily stores a program to be used in the execution on the CPU 201, a parameter that varies as appropriate in the execution and so on. They are connected with each other through the host bus 204, which is composed of a CPU bus or the like.

The host bus 204 is connected to the external bus 206 such as a PCI (Peripheral Component Interconnect/Interface) bus via the bridge 205. The host bus 204, the bridge 205 and the external bus 206 are not necessarily configured separately from each other, and their functions may be implemented on a single bus.

The input unit 208 may include an input means for a user to input information, such as a mouse, a keyboard, a touch panel, a button, a microphone, a switch and a lever, and an input control circuit that generates an input signal based on a user input and outputs it to the CPU 201, for example. A user of the PC 20 can input various data or direct processing operation to the PC 20 by manipulating the input unit 208.

The output unit 210 is composed of a display device such as a CRT (Cathode Ray Tube) display device, a liquid crystal display (LCD) device, an OLED (Organic Light Emitting Display) device and a lamp, and a sound output device such as a speaker and a headphone, for example. The output unit 210 outputs reproduced contents, for example. Specifically, the display device displays information such as reproduced video data by a text or an image. On the other hand, the sound output device converts reproduced sound data or the like into a sound and outputs it.

The storage unit 211 is a device for data storage that is configured as an example of a storage portion of the PC 20 according to this embodiment. The storage unit 211 may include a storage medium, a recording device that records data onto the storage medium, a reading device that reads data from the storage medium, a deleting device that deletes data recorded on the storage medium and so on. The storage unit 211 may be composed of an HDD (Hard Disc Drive), for example. The storage unit 211 drives a hard disk and stores a program to be executed by the CPU 201 or various data. Images, image-related information, image selection results and so on, which are described later, are recorded on the storage unit 211.

The drive 212 is a reader/writer for a storage medium, and it may be built in the PC 20 or attached externally. The drive 212 reads information recorded on a removable storage medium 24 such as a magnetic disk, an optical disk, a magneto-optical disk and a semiconductor memory which is attached thereto and outputs the information to the RAM 203.

The communication unit 215 is a communication interface that is composed of a communication device or the like for establishing connection with the communication network 12, for example. The communication unit 215 may be a communication device compatible with a wireless LAN (Local Area Network), a communication device compatible with a wireless USB, or a wired communication device that performs wired communication. The communication unit 215 may transmit/receive images with the photographing apparatus 10.

### (3-2) Function of the PC

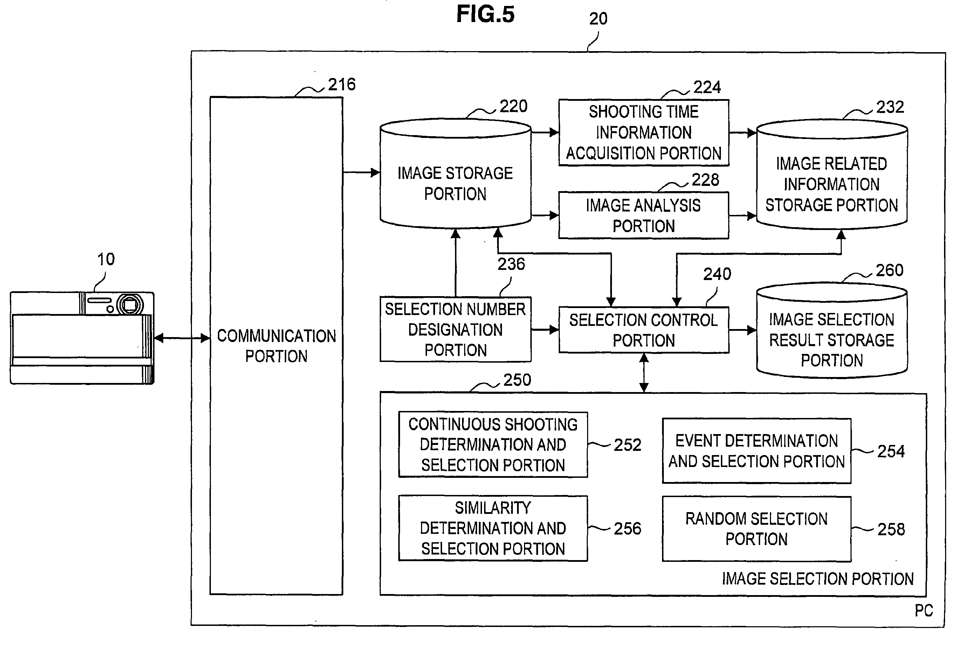

The hardware configuration of the PC 20 according to this embodiment is described above with reference to FIG. 4. Referring then to FIGS. 5 to 12, the function of the PC 20 is described hereinbelow.

FIG. 5 is a functional block diagram showing the configuration of the PC 20 according to the first embodiment. As shown in FIG. 5, the PC 20 includes a communication portion 216, an image storage portion 220, a shooting time information acquisition portion 224, an image analysis portion 228, an image-related information storage portion 232, a selection number designation portion 236, a selection control portion 240, an image selection portion 250 and an image selection result storage portion 260.

The communication portion 216 is an interface with the photographing apparatus 10, and it receives a set of images taken by the photographing apparatus 10. The image storage portion 220 stores a set of images received by the communication portion 216 together with its shooting time. In the case where the images taken by the photographing apparatus 10 are recorded on a storage medium that is detachable from the photographing apparatus 10 and the PC 20, the image storage portion 220 may be the storage medium.

The storage medium may be nonvolatile memory such as EEPROM (Electrically Erasable Programmable Read-Only Memory) and EPROM (Erasable Programmable Read-Only Memory), magnetic disks such as hard disk and discoid magnetic disk, optical disks such as CD-R (Compact Disc Recordable)/RW (ReWritable), DVD-R (Digital Versatile Disk Recordable)/RW/+R/+RW/RAM(Random Access Memory) and BD (Blu-ray Disc (registered trademark))-R/BD-RE, MO (Magneto Optical) disk and so on. The image-related information storage portion 232 and the image selection result storage portion 260, which are described later, may be also such storage media. Although the image storage portion 220, the image-related information storage portion 232 and the image selection result storage portion 260 are illustrated as different elements in FIG. 5, the image storage portion 220, the image-related information storage portion 232 and the image selection result storage portion 260 may be the same storage medium.

The shooting time information acquisition portion 224 acquires shooting time information from EXIF information, for example, of the image stored in the image storage portion 220 and records it into the image-related information storage portion 232. Specifically, the shooting time information acquisition portion 224 may record an image ID for identifying an image and the shooting time of the image in association with each other into the image-related information storage portion 232.

The image analysis portion 228 analyzes the image stored in the image storage portion 220, extracts the feature amount of the image and records it into the image-related information storage portion 232. The feature amount of the image may include a color distribution that indicates the colors included in the image and their proportions, the position and size of the face included in the image, the magnitude of each frequency component included in the image, the degree of smiling of the subject included in the image and so on.

The image-related information storage portion 232 stores image-related information such as shooting time information of the image acquired by the shooting time information acquisition portion 224, the feature amount of the image extracted by the image analysis portion 228 and so on.

The selection number designation portion 236 functions as a selection number designation portion that designates a final selection number (selection number), which is the number of images to be finally selected from a set of images stored in the image storage portion 220. The selection number designation portion 236 may designate the final selection number based on a variety of information, inputs and so on. For example, in the case of displaying images as a slideshow at a given interval during playback of a certain song, the selection number designation portion 236 may designate a value obtained by dividing a playback time of the song by the given interval as the final selection number.

Alternatively, in the case of laying out images of a given size within a certain range, the selection number designation portion 236 may calculate the number of images of the given size which is necessary for the layout in the range and designate it as the final selection number. Or, the selection number designation portion 236 may designate the number of images which is input by a user as the final selection number.

Alternatively, in the case of ordering printing of images from a business, the selection number designation portion 236 may designate a value obtained by dividing a budget which is input by a user by a printing fee per sheet as the final selection number. Or, the selection number designation portion 236 may designate the number of images which corresponds to the amount of data that is input by a user as the final selection number.

The selection control portion 240 causes the image selection portion 250 to select the final selection number of images which is designated by the selection number designation portion 236 from a set of images stored in the image storage portion 220. Then, the image selection result storage portion 260 stores the images or the image ID selected by the image selection portion 250 based on control by the selection control portion 240. The functions of the selection control portion 240 and the image selection portion 250 which select the final selection number of images from a set of images stored in the image storage portion 220 are described hereinafter in detail.

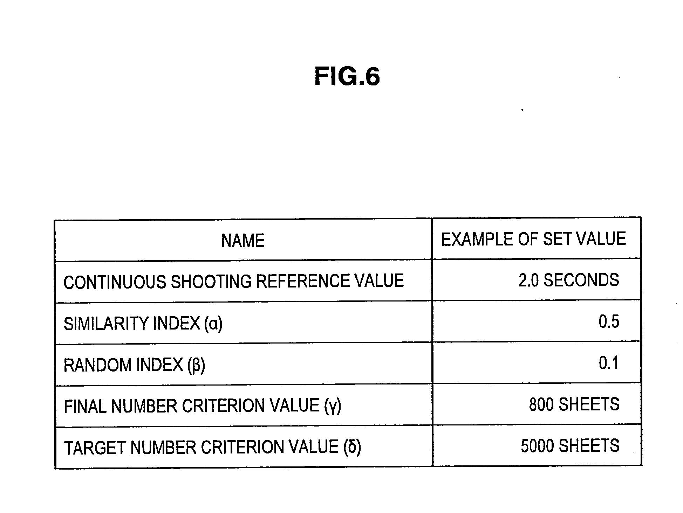

FIG. 6 is an explanatory view showing an example of parameters which are used in the selection control portion 240 and the image selection portion 250. As shown in FIG. 6, parameters such as a continuous shooting reference value, a similarity index (given index), a random index, a final number criterion value and a target number criterion value are used in this embodiment. Those parameters are also used to determine what amount of images is to be processed in each selection portion. Therefore, those parameters may be determined based on a desired final selection number or an operating time allowable in a system. The use and the meaning of each parameter are described as appropriate later where it is adequate.

The image selection portion 250 includes a continuous shooting determination and selection portion 252, an event determination and selection portion 254, a similarity determination and selection portion 256 and a random selection portion 258.

### (Continuous shooting determination and selection portion)

The continuous shooting determination and selection portion 252 functions as a third selection portion that reduces the number of selection target images so as to avoid selection of a plurality of images from a series of continuously shot images as much as possible. Specifically, the continuous shooting determination and selection portion 252 first calculates a difference in shooting time between adjacent images, which is a shooting time interval, for the respective selection target images that are arranged in order of shooting time based on the shooting time information stored in the image-related information storage portion 232.

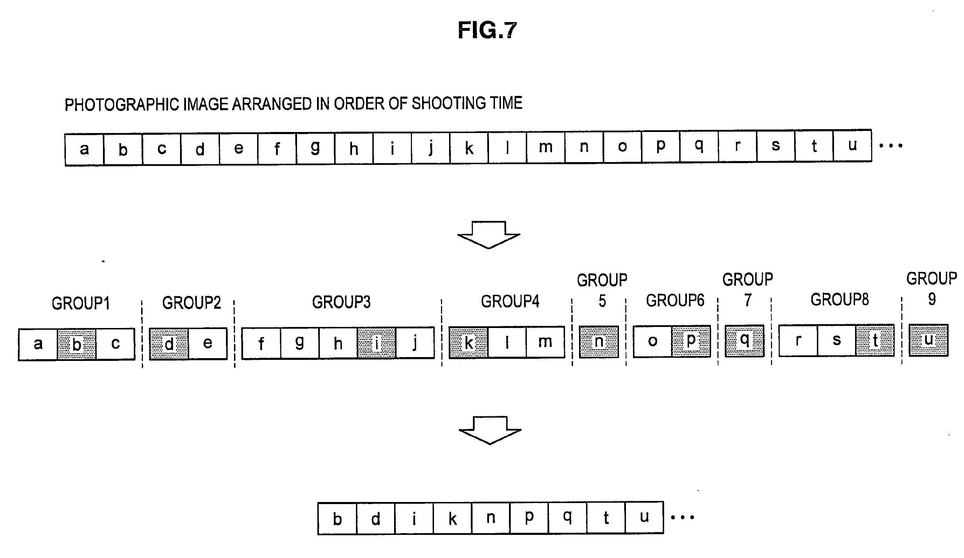

Then, the continuous shooting determination and selection portion 252 classifies the images whose shooting time interval is within a specified time into the same group, and, if there is an image whose shooting time interval is longer than the specified time, it classifies the image into the next group. The continuous shooting determination and selection portion 252 may use the continuous shooting reference value (set interval value) shown in FIG. 6 as the specified time. After that, the continuous shooting determination and selection portion 252 selects one image from each group. The processing by the continuous shooting determination and selection portion 252 up to this point is schematically shown in FIG. 7.

FIG. 7 is an explanatory view schematically showing the processing by the image selection portion 250. As shown in FIG. 7, the continuous shooting determination and selection portion 252 classifies the images a to u which are arranged in order of shooting time into a plurality of groups depending on the shooting time interval. FIG. 7 illustrates the case where the images a to u which are arranged in order of shooting time are classified into a group 1 composed of the images a to c, a group 2 composed of the images d and e, a group 3 composed of the images f to j, a group 4 composed of the images k to m, a group 5 composed of the image n, a group 6 composed of the images o and p, a group 7 composed of the image q, a group 8 composed of the images r to t, and a group 9 composed only of the image u.

Further, the continuous shooting determination and selection portion 252 selects one image from each group, for example. FIG. 7 illustrates the case where the continuous shooting determination and selection portion 252 selects the image b from the group 1, the image d from the group 2, the image i from the group 3, the image k from the group 4, the image n from the group 5, the image p from the group 6, the image q from the group 7, the image t from the group 8, and the image u from the group 9.

In the case of "the number of groups ≥ the minimum number of photographic images to be selected", the continuous shooting determination and selection portion 252 ends the processing by determining the images as representatives of the respective groups as the selection result. On the other hand, in the case of "the number of groups < the minimum number of photographic images to be selected", the continuous shooting determination and selection portion 252 further additionally selects images randomly from all the photographic images which have not been selected, in addition to the images as representatives of the respective groups, so as to obtain the minimum number of photographic images to be selected and then ends the processing.

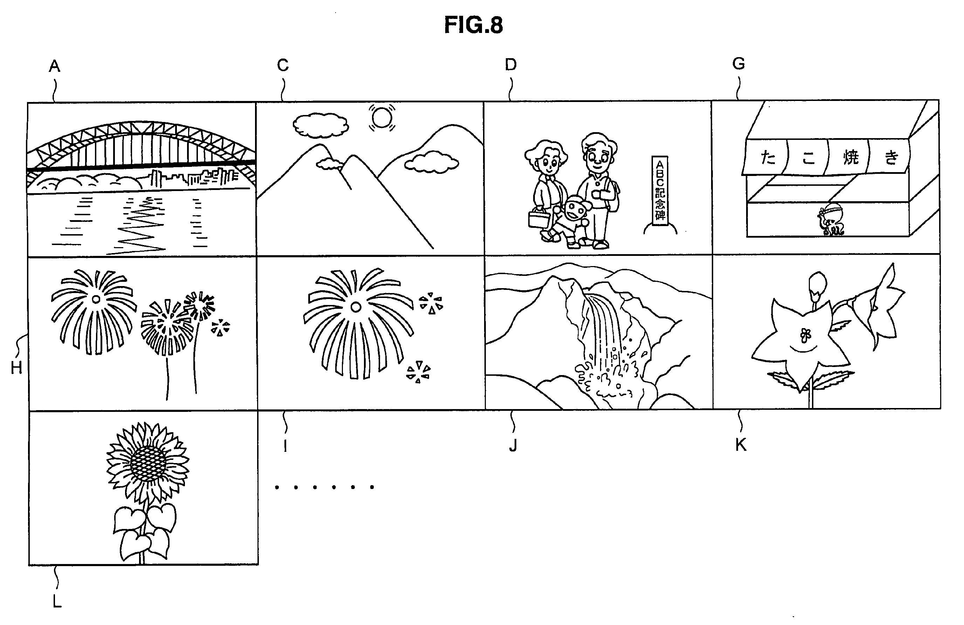

If the continuous shooting determination and selection portion 252 performs image selection on the set of images shown in FIG. 2, the images shown in FIG. 8 are selected, for example.

FIG. 8 is an explanatory view showing an example of a result of image selection by the continuous shooting determination and selection portion 252. As shown in FIG. 8, the continuous shooting determination and selection portion 252 can select only the image C from the images B and C which are shot at an interval of one second and select only the image D from the images D to F which are shot at an interval of two seconds. Because the images with a short shooting interval, such as the images D to F, are likely to be shot in the similar location and have the similar composition, the continuous shooting determination and selection portion 252 can reduce the possibility that a plurality of images which are likely to be similar to each other are selected.

### (Event determination and selection portion)

The event determination and selection portion 254 functions as a fourth selection portion that classifies the selection target images into a plurality of groups according to the dispersion of shooting time intervals and performs image selection so as to include the images of different events as much as possible. The events may be events such as a family travel, an athletic festival and a wedding ceremony, or detailed occasions such as mountain climbing, fireworks and a drive during a family travel, for example. The number of images to be selected from the selection target images is designated by the selection control portion 240, and the event determination and selection portion 254 selects the designated number of images.

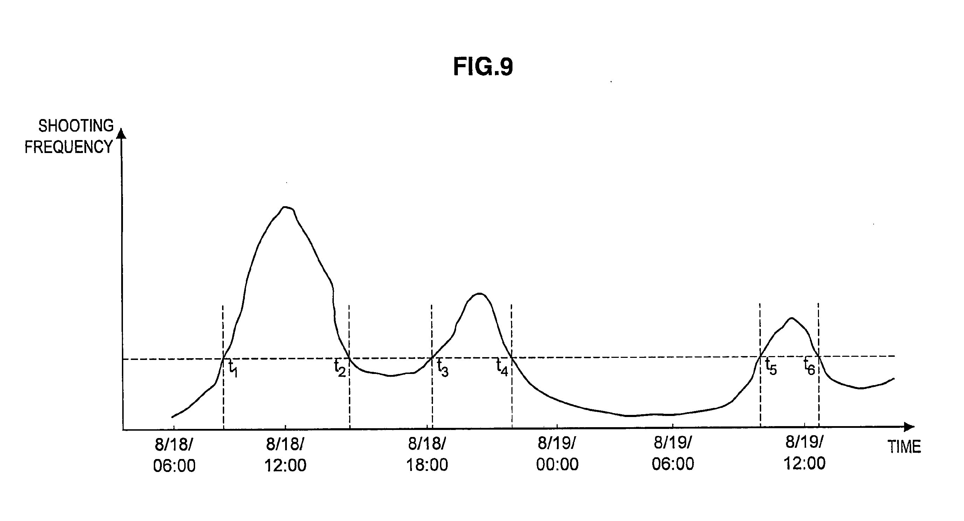

Specifically, the event determination and selection portion 254 first classifies the images which are arranged in order of shooting time, or the selection target images, into a plurality of groups based on the dispersion of shooting time intervals, the number of images shot within each unit time and so on. Further, the event determination and selection portion 254 randomly selects one image as a representative of a group from each group. The processing by the event determination and selection portion 254 up to this point is performed as shown in FIG. 7, which is referred to in the description of the continuous shooting determination and selection portion 252. The classification of the selection target images into a plurality of groups by the event determination and selection portion 254 is performed as shown in FIG. 9, for example.

FIG. 9 is an explanatory view showing the way that the selection target images are classified into a plurality of groups by the event determination and selection portion 254. The graph shows the moving average of the shooting frequency of the selection target images, and the horizontal axis indicates time and the vertical axis indicates a shooting frequency. As shown in FIG. 9, the event determination and selection portion 254 may make classification into different groups each time the shooting frequency crosses a boundary value indicated by the horizontal dotted line. In the example of FIG. 9, the selection target images are classified into a group of images whose shooting time is between time t1 and time t2, a group of images whose shooting time is between time t2 and time t3, a group of images whose shooting time is between time t3 and time t4, a group of images whose shooting time is between time t4 and time t5, and a group of images whose shooting time is between time t5 and time t6.

The classification of the selection target images into a plurality of groups by the event determination and selection portion 254 is described in the following reference as well, for example:
Reference: Japanese Unexamined Patent Publication No. 2007-206919.

In the case of "the number of groups ≥ the number of images to be selected", the event determination and selection portion 254 retrieves a photographic image as a representative of each group preferentially from a group with a larger number of images and finishes the processing by determining the images as the selection result. On the other hand, in the case of "the number of groups < the number of images to be selected", the event determination and selection portion 254 adds an image which is randomly selected from the images that have not been selected to the images as representatives of the respective groups so as to obtain the designated number of images and then finishes the processing.

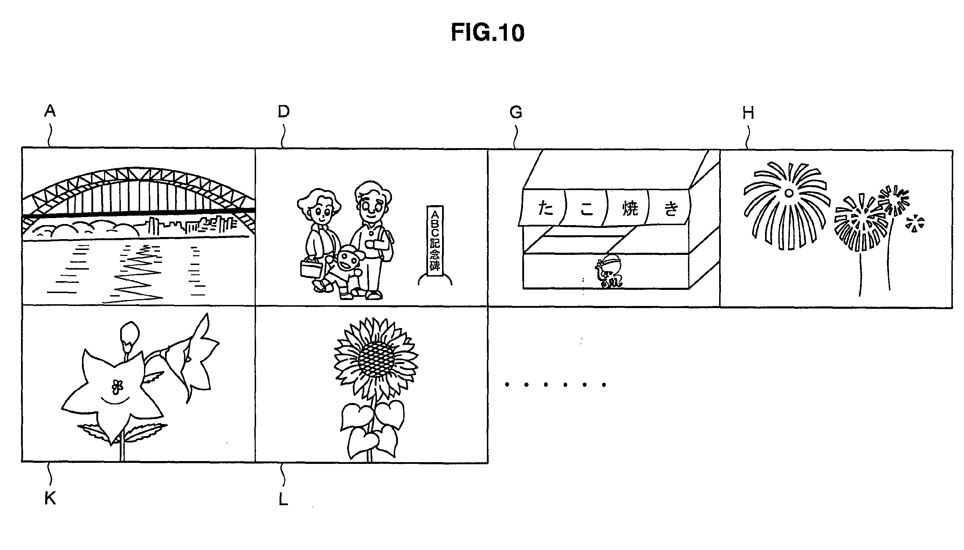

If the event determination and selection portion 254 performs image selection on the set of images shown in FIG. 8, the images shown in FIG. 10 are selected, for example.

FIG. 10 is an explanatory view showing an example of a result of image selection by the event determination and selection portion 254. As shown in FIG. 10, the event determination and selection portion 254 can uniformly select images of events in different time, such as photographs in the morning like the images A and C, a photograph in the daytime like the image D, and photographs in the evening like the images G, H and I, from the set of images shown in FIG. 8. Each of a plurality of groups which are classified according to the dispersion of shooting time is likely to include the images that are shot under the circumstances where the environment such as a location and an event is similar. Thus, the event determination and selection portion 254 selects an image from each group as described above, thereby reducing the number of selected images shot under the similar circumstances.

### (Similarity determination and selection portion)

The similarity determination and selection portion 256 functions as a first selection portion that selects images from the selection target images so as to reduce the images which are similar in appearance as much as possible. The number of images to be selected from the selection target images is designated by the selection control portion 240, for example, and the similarity determination and selection portion 256 selects the designated number of images.

Specifically, the similarity determination and selection portion 256 first calculates the similarity distances of the images arranged in order of shooting time from the respective adjacent images. The similarity distance is a numerical measure of the similarity in appearance between images based on the feature amount of images stored in the image-related information storage portion 232, and it is represented by a larger value as the feature amount is closer to each other.

For example, the similarity distance between an image feature amount A containing 10% red and 90% white and an image feature amount B containing 15% red and 85% white may be expressed as 10. On the other hand, the similarity distance between the image feature amount A and an image feature amount C containing 80% red and 20% black may be expressed as 1.

Then, the similarity determination and selection portion 256 determines the similarity distance that is the "the designated image selection number -1"th in length among the similarity distances between all adjacent images and sets this value as a threshold. The similarity determination and selection portion 256 sequentially classifies the images whose similarity distances are smaller than the threshold into the same group, and if there is an image whose similarity distance is equal to or larger than the threshold, it classifies the image into a different group. After that, the similarity determination and selection portion 256 randomly selects one image as a representative of a group from each group. The processing by the similarity determination and selection portion 256 up to this point is performed as shown in FIG. 7, which is referred to in the description of the continuous shooting determination and selection portion 252.

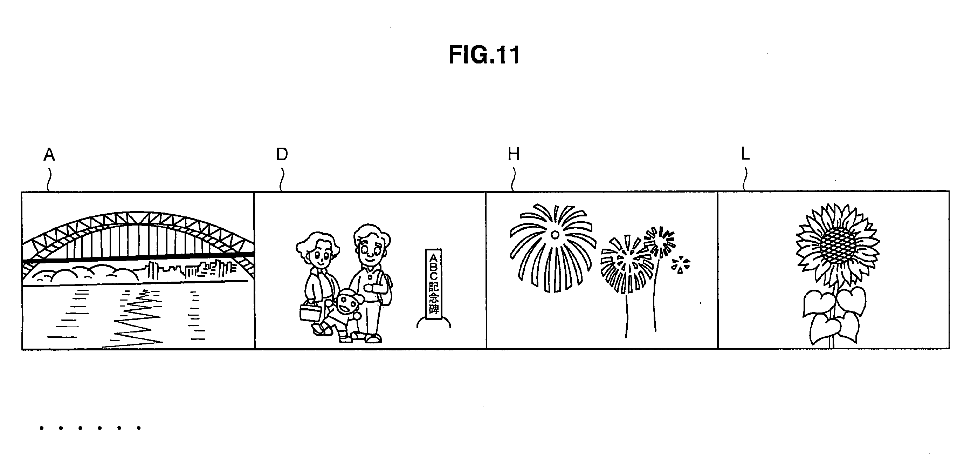

If the similarity determination and selection portion 256 performs image selection on the set of images shown in FIG. 10, the images shown in FIG. 11 are selected, for example.

FIG. 11 is an explanatory view showing an example of a result of image selection by the similarity determination and selection portion 256. As shown in FIG. 11, the similarity determination and selection portion 256 can select only the image L from the images K and L having a high degree of similarity in appearance because the subject is a flower from the set of images shown in FIG. 10. Further, the similarity determination and selection portion 256 can select only the image H from the images G and H which are similar in that they are dark images overall.

Although the case where the similarity determination and selection portion 256 classifies images into groups based on the similarity distance between adjacent images is described above, it may classify images into groups using a known clustering technique based on the similarity distance among all the selection target images. In such a case, however, the amount of operations generally becomes larger depending on the number of images.

Further, although the case where the similarity determination and selection portion 256 randomly selects an image as a representative of a group from each group is described above, a photographic image containing a face may be preferentially selected as a representative or a photographic image containing a face with a high degree of smiling may be selected as a representative based on the result of image analysis, or, a more colorful image may be selected as a representative based on color distribution, for example.

### (Random selection portion)

The random selection portion 258 functions as a second selection portion that randomly selects images from the selection target images. The number of images to be selected from the selection target images is designated by the selection control portion 240, for example, and the random selection portion 258 selects the designated number of images.

### (Selection control portion)

The selection control portion 240 controls each element of the image selection portion 250 described above, thereby selecting the final selection number of images which is designated by the selection number designation portion 236 from the set of images stored in the image storage portion 220. The function of the selection control portion 240 is described in detail hereinbelow.

This embodiment aims at selecting a necessary number of images from a large number of images. Accordingly, in the case of "the number of selection target images ≤ the final selection number", image selection is not necessary because the number of selection target images is already within the final selection number. How to deal with the case of "the number of selection target images ≤ the final selection number" generally depends on application. For example, in the case of a slideshow in which the number of images to be used is fixed, it is necessary to prepare the final selection number of images by repeatedly using images, or, in the case of narrowing down the number of images simply for the purpose of increasing browsability, it is feasible to use all the images as they are. The following description is given on the assumption of "the number of selection target images > the final selection number".

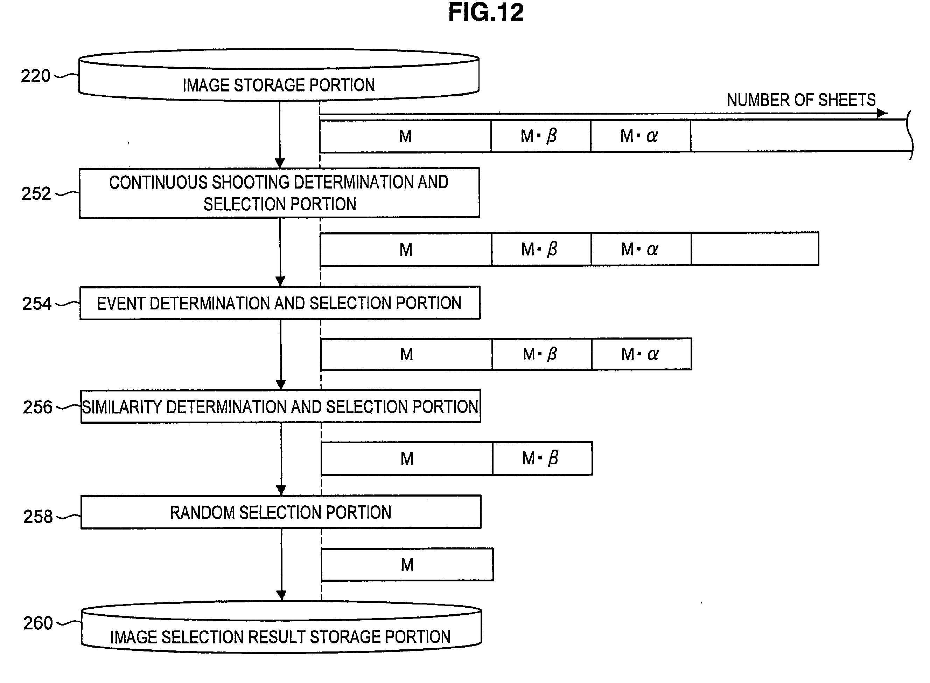

The selection control portion 240 basically causes the continuous shooting determination and selection portion 252, the event determination and selection portion 254, the similarity determination and selection portion 256 and the random selection portion 258 to perform image selection in this order as shown in FIG. 12 from the set of images stored in the image storage portion 220, thereby obtaining the final selection number of images.

FIG. 12 is an explanatory view showing the way of selecting the final selection number of images. As shown in FIG. 12, it is assumed that the number of the set of images stored in the image storage portion 220 is larger than (1+α+ β)*M, and the number of the images selected by the continuous shooting determination and selection portion 252 is also larger than (1+α+β)*M.

In this case, the selection control portion 240 causes the event determination and selection portion 254 to select the (1+α+β)*M number of images from the images selected by the continuous shooting determination and selection portion 252. After that, the selection control portion 240 causes the similarity determination and selection portion 256 to select the (1+β)*M number of images from the (1+α+β)*M number of images selected by the event determination and selection portion 254.

Further, the selection control portion 240 causes the random selection portion 258 to select the M number, which is the final selection number, of images from the (1+β)*M number of images selected by the similarity determination and selection portion 256. As a result, the PC 20 can randomly select images from the images with a low degree of similarity in appearance as shown in FIG. 11, for example, which are selected by the similarity determination and selection portion 256.

As is understandable from the above description, the random index β indicates the degree of randomness to be added to the finally selected images. For example, if β=0.1 as shown in FIG. 6 and the final selection number M is ten, the random selection portion 258 randomly selects ten images out of the eleven images which have been selected prior to the selection by the random selection portion 258. Accordingly, as the random index β is higher, the randomness of the finally selected images increases. On the other hand, if the randomness is not particularly necessary, which is when it is sufficient to perform image selection of this embodiment once and there is no use case for reselection, β may be set to β=0.0 and the proportion of the images to be processed by the other selection portions may be increased relatively.

The similarity index α indicates how many number of images are to be processed in the similarity determination and selection portion 256. If β=0.1, α=0.5 and the final selection number M is ten, the similarity determination and selection portion 256 selects eleven images out of the sixteen images which have been selected prior to the selection by the similarity determination and selection portion 256. Accordingly, as the similarity index α is higher, the number of images to be processed in the similarity determination and selection portion 256 increases, which causes the operating time of the PC 20 as a whole to be longer. Further, as described earlier, the similarity determination and selection portion 256 is the processing of grouping the images which are relatively similar to each other from a set of selection target images. Therefore, as the similarity index α is higher, the determination as to whether "the images are similar or not" becomes less strict.

By such control made by the selection control portion 240 which causes image selection by the random selection portion 258 to be performed in the last place, the randomness of the finally selected images is improved. If, assumingly, the selection control portion 240 makes control which causes image selection by the similarity determination and selection portion 256 to be performed in the last place, the following issue can occur.

For example, if there is a group which is composed of a single image such as "q" and "u" as a result of the grouping by the similarity determination and selection portion 256 as shown in FIG. 7, a result of random selection of one image from each group is always the same image.

The advantage that the selection control portion 240 causes the continuous shooting determination and selection portion 252, the event determination and selection portion 254 and the similarity determination and selection portion 256 to perform image selection in this order is described hereinafter.

In terms of the purpose to prevent inclusion of a plurality of similar images in a final result, it is seemingly effective that the event determination and selection portion 254 performs image selection after the continuous shooting determination and selection portion 252 and the similarity determination and selection portion 256 perform image selection. This is because if the event determination and selection portion 254 narrows down the number of images in advance and consequently the similar images mostly remain at the stage of image selection by the similarity determination and selection portion 256, the similarity determination and selection portion 256 fails to completely remove the similar images (disadvantage 1).

For example, in the case where the similarity determination and selection portion 256 selects eleven images from sixteen images, if ten images out of the sixteen images are extremely similar images, at least five similar images, out of the finally selected eleven images, are selected.

However, because the image selection processing by the similarity determination and selection portion 256 generally includes high-order similar distance calculation based on the feature amount of images, the amount of operations is larger compared to the other processing. Since the number of processing target images decreases as the image selection processing is performed at the later stage, the amount of operations can be reduced by performing the image selection processing with a large amount of operations at the later stage.

On the other hand, the continuous shooting determination and selection portion 252 performs light image selection processing that principally calculates a difference in time information. Thus, in view of the amount of operations in the PC 20, the selection control portion 240 causes image selection by the continuous shooting determination and selection portion 252 to be performed in the first place. Further, in most cases, the above-described disadvantage 1 occurs when the images included in the set of selection target images are mostly extremely similar to each other, and, in such a case, the probability that a result changes for the better is low even if the similarity determination and selection portion 256 performs image selection beforehand. Therefore, the selection control portion 240 causes the similarity determination and selection portion 256 to perform image selection after reducing the number of selection target images by the event determination and selection portion 254.

As described earlier, the selection control portion 240 basically controls image selection to be performed in order of the continuous shooting determination and selection portion 252, the event determination and selection portion 254, the similarity determination and selection portion 256 and the random selection portion 258. However, because the similarity index α which is used in image selection by the similarity determination and selection portion 256 indicates a proportion to the final selection number M, the number of images to be processed in the similarity determination and selection portion 256 increases as the final selection number M increases.

In view of this, if the final selection number M is larger than a final number criterion value γ, the selection control portion 240 does not cause the similarity determination and selection portion 256 and the event determination and selection portion 254 to perform image selection but causes the random selection portion 258 to perform image selection. In such a configuration, the selection control portion 240 causes the random selection portion 258 to perform image selection when it is determined that a load generated in the similarity determination and selection portion 256 exceeds an allowable range, thereby suppressing a processing load of image selection in the PC 20.

Although FIG. 6 shows the case where the final number criterion value γ is 800, the final number criterion value γ is not limited to 800. The final number criterion value γ may be a fixed value that is previously set in accordance with the performance of the PC 20, or a value that is arbitrarily set by a user of the PC 20. Further, a user of the PC 20 may input the time allowed for image selection processing by the PC 20, and then the PC 20 may calculate the value of the final number criterion value γ so as to complete the image selection processing within the time. The final number criterion value γ may be set dynamically according to the value of the similarity index α.

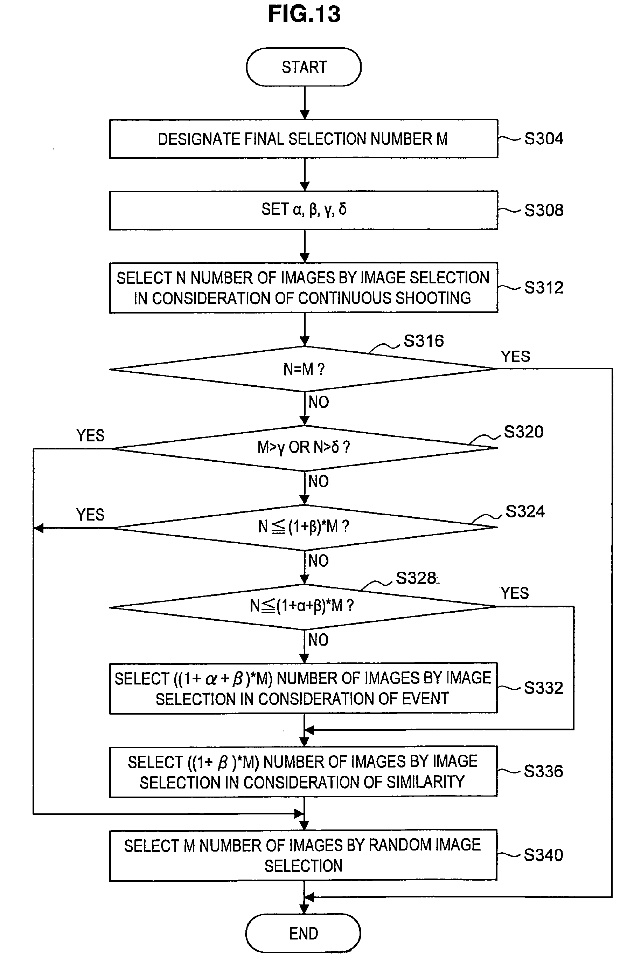

Further, in the case of selecting ten images out of eleven images, for example, it is not always appropriate to cause the continuous shooting determination and selection portion 252, the event determination and selection portion 254, the similarity determination and selection portion 256 and the random selection portion 258 to perform image selection. This is because unnecessary operations can occur in some cases. Accordingly, the selection control portion 240 may determine from which selection portion the processing is to be performed according to the number of selection target images with respect to the final selection number M. For example, in the case where the final selection number M is close to the initial number of selection target images, such as when selecting nineteen images out of twenty images, the processing may be performed only by the random selection portion 258, without being performed by the similarity determination and selection portion 256, the event determination and selection portion 254 and so on. The other control by the selection control portion 240 is described hereinbelow together with the entire operation of the PC 20 with reference to FIG. 13.

### (3-3) Operation of the PC

FIG. 13 is a flowchart showing the flow of the image selection method which is executed in the PC 20 according to the first embodiment. Firstly, the selection number designation portion 236 of the PC 20 designates the final selection number M (S304). Next, each parameter (α, β, γ, δ) is set (S308). The setting may be made manually or automatically.

Then, the selection control portion 240 causes the continuous shooting determination and selection portion 252 to perform image selection in consideration of continuous shooting (S312). The number of images selected by the continuous shooting determination and selection portion 252 is expressed as N. If N is equal to the final selection number M, the selection control portion 240 ends the process without causing the image selection portion 250 to perform further image selection (S316).

On the other hand, if N is different from the final selection number M, the selection control portion 240 determines whether the condition of either "M>γ" or "N>δ" is satisfied (S320). If the selection control portion 240 determines that the condition of either "M>γ" or "N>δ" is satisfied, it causes the random selection portion 258 to select the M number, which is the final selection number, of images (S340).

Specifically, when "N>δ", it means that there is an enormous number of images to be selected by the event determination and selection portion 254, and the amount of operations in the event determination and selection portion 254 can become excessively large. Thus, when "N>δ", the selection control portion 240 causes the random selection portion 258, rather than the event determination and selection portion 254, to perform image selection, thereby reducing a processing load of image selection in the PC 20.

If the selection control portion 240 determines that both of "M>γ" and "N>δ" are not satisfied in S320, it then determines whether N is larger than (1+β)*M (S324). If the selection control portion 240 determines that N is smaller than (1+β)*M, it proceeds to S340. If, on the other hand, the selection control portion 240 determines that N is larger than (1+β)*M, it further determines whether N is larger than (1+α+β)*M (S328).

If the selection control portion 240 determines that N is larger than (1+α+β)*M, it causes the event determination and selection portion 254 to select the (1+α+β)*M number of images (S332). If, on the other hand, the selection control portion 240 determines that N is smaller than (1+α+β)*M, it causes the similarity determination and selection portion 256 to select the (1+β)*M number of images (S336).

After S332, the selection control portion 240 causes the similarity determination and selection portion 256 to perform image selection (S336), further causes the random selection portion 258 to perform image selection (S340), and then ends the processing.

### (4) Second embodiment

### (4-1) Circumstances of development of a second embodiment

Digital cameras are widely used today, and editing of a photographic image captured by a digital camera on a PC, execution of a slideshow that sequentially displays photographic images on a display apparatus and so on are popularly performed.

Further, in the slideshow, music can be played while images are displayed. As a method of playing music during the slideshow, the following methods are possible.
(1) Use fixed music and a template in which image switching timing and effects are adjusted to match the music.
(2) Perform a slideshow of images while playing music designated by a user

In the above method (1), although a slideshow in synchronization with the music flow can be created, it is inconvenient in that a user is unable to specify desired music. On the other hand, in the method (2), although a user can specify desired music, a complaint remains for a user in that image switching timing and effects in the slideshow do not match the music flow.

According to "PLAYBACK CONTROL APPARATUS AND METHOD, AND PROGRAM" disclosed in Japanese Unexamined Patent Publication No. 2207-35121, it is possible to select effects of images in a slideshow based on a sound waveform. However, it is difficult to create a slideshow that matches the mood of music in the above "PLAYBACK CONTROL APPARATUS AND METHOD, AND PROGRAM".

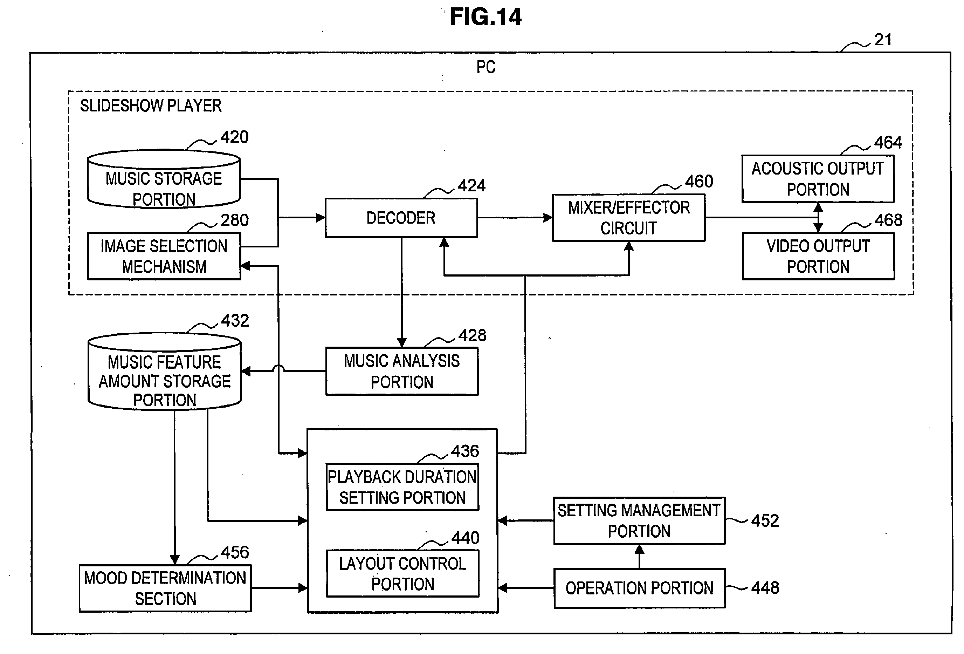

In light of the above issue, a PC 21 according to a second embodiment has been invented. The PC 21 according to the second embodiment enables creation of a slideshow matching the music mood. The PC 21 is described hereinafter in detail with reference to FIGS. 14 to 27.

### (4-2) Explanation of the PC according to the second embodiment

FIG. 14 is a functional block diagram showing the configuration of the PC 21 according to the second embodiment. As shown in FIG. 14, the PC 21 according to the second embodiment includes an image selection mechanism 280, a music storage portion 420, a decoder 424, a music analysis portion 428, a music feature amount storage portion 432, a playback duration setting portion 436, a layout control portion 440, an operation portion 448, a setting management portion 452, a mood determination portion 456, a mixer/effector circuit 460, an acoustic output portion 464, and a video output portion 468.

The image selection mechanism 280 stores one or more sets of images and selects a given number of images from the one or more sets of images. Specifically, the image selection mechanism 280 may be composed of the image storage portion 220, the shooting time information acquisition portion 224, the image analysis portion 228, the image-related information storage portion 232, the selection number designation portion 236, the selection control portion 240, the image selection portion 250 and so on, which are described in the first embodiment. Further, the image selection mechanism 280 supplies the selected images to the decoder 424 according to the sequence arranged in an image display frame, which is described later, by the layout control portion 440.

The music storage portion 420 stores arbitrary music data. Although the music storage portion 420 and the music feature amount storage portion 432 are illustrated as different units in FIG. 14, the music storage portion 420 and the music feature amount storage portion 432 may be the same storage medium.

The decoder 424 has a decoding function to decode music data stored in the music storage portion 420 and images stored in the image selection mechanism 280. For example, the decoder 424 decodes music data in MP3 (MPEG1 Audio Layer-3) format or ATRAC (Adaptive TRansform Acoustic Coding) format into PCM format.

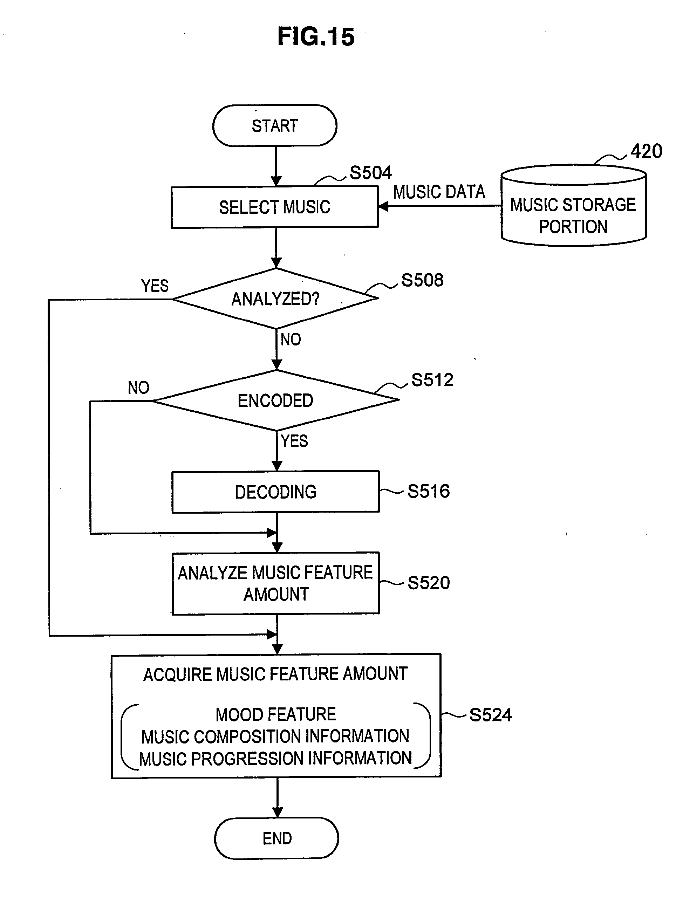

The music analysis portion 428 analyzes the music data decoded by the decoder 424, acquires a music feature amount and stores it into the music feature amount storage portion 432. The flow until the music analysis portion 428 acquires the music feature amount is summarized in FIG. 15.

FIG. 15 is a flowchart showing the flow until the music analysis portion 428 acquires the music feature amount. As shown in FIG. 15, any of the music data stored in the music storage portion 420 is selected by a user through the operation portion 448, for example (S504). Then, if the music data is not already analyzed (S508) and the music data is encoded (S512), the decoder 424 decodes the music data (S526).

After that, the music analysis portion 428 makes sound analysis, for example, of the music data decoded into PCM format or non-encoded music data (S520) and acquires the music feature amount (S524).

Examples of the music feature amount acquired by the music analysis portion 428 are described hereinafter.

### (Mood feature amount)

This is the feature amount obtained by converting impression, atmosphere or feeling of music such as "cheerful", "happy", "sad" and "refreshing" into numbers. The mood feature amount, which is higher-order feature amount, can be extracted by extracting basic feature amount (e.g. tempo, music progression information described below, etc.) through signal processing (sound analysis) of music data and then conducting machine learning and sound estimation using the basic feature amount. More specific analysis methods are disclosed in Japanese Unexamined Patent Publications Nos. 2005-275068, 2008-27538, 2008-65905 and so on, for example.

### (Music composition information)

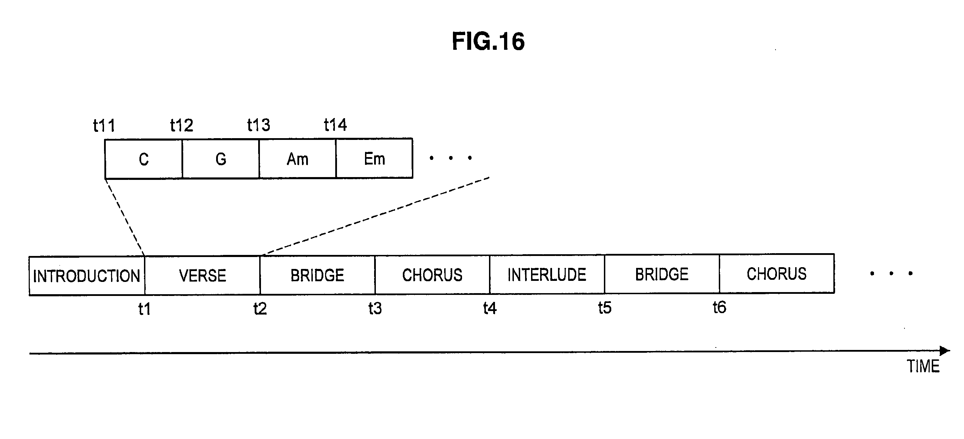

Information indicating the timing when starting components of music such as verse, bridge, chorus and ending relative to the head of the music. Referring to FIG. 16, the music composition information is described more specifically.

FIG. 16 is an explanatory view showing an example of music composition. FIG. 16 shows a case where the components are arranged in the sequence of introduction, verse, bridge, chorus, interlude, bridge, chorus and so on. In this case, the music analysis portion 428 acquires time t1 at which switching from introduction to verse occurs, time t2 at which switching from verse to bridge occurs, time t3 at which switching from bridge to chorus occurs, and, in the same manner, time t4 to t6, as the music composition information.

In this specification, the impressive part of music is referred to as chorus. Because a method of analyzing music composition information is disclosed in Japanese Unexamined Patent Publication No. 2007-156434, for example, detailed explanation is omitted in this specification.

### (Music progression information)

This is the information indicating the timing when reaching each beat, measure and chord (C major, A minor etc.) during music relative to the head of the music. For example, in the case shown in FIG. 16, the music analysis portion 428 acquires time t11 at which switching into C chord occurs, time t12 at which switching into G chord occurs, time t13 at which switching into Am chord occurs, time t14 at which switching into Em chord occurs, and so on as the music composition information. Because a method of analyzing music progression information is disclosed in Japanese Unexamined Patent Publication No. 2007-183417, for example, detailed explanation is omitted in this specification.

Returning to the explanation of the configuration of the PC 21 with reference to FIG. 14, the operation portion 448 is a user interface to which various kinds of information and various kinds of instructions are input by a user. The setting management portion 452 makes various settings based on a user operation to the operation portion 448, for example. The various settings include setting of a playback duration, setting of a layout framework, setting of effects, image selection and so on, which are described later.

The mixer/effector circuit 460 performs given processing on the music data and images decoded by the decoder 424 and outputs a result. For example, the mixer/effector circuit 460 performs fade-in/fade-out processing on the music data decoded by the decoder 424 and outputs a result to the acoustic output portion 464. Further, the mixer/effector circuit 460 has a function as a display control portion that applies the effects set by the layout control portion 440 to the images decoded by the decoder 424 and outputs a result to the video output portion 468.

The acoustic output portion 464 converts the music data supplied from the mixer/effector circuit 460 into aerial vibration, for example, and outputs a result. Thus, the decoder 424, the mixer/effector circuit 460 and the acoustic output portion 464 function as a music playback portion that plays back music data in collaboration with one another. Further, the video output portion 468 displays the image supplied from the mixer/effector circuit 460 so as to be visible to a user. Thus, the decoder 424, the mixer/effector circuit 460 and the video output portion 468 function as an image display portion that displays images in collaboration with one another.

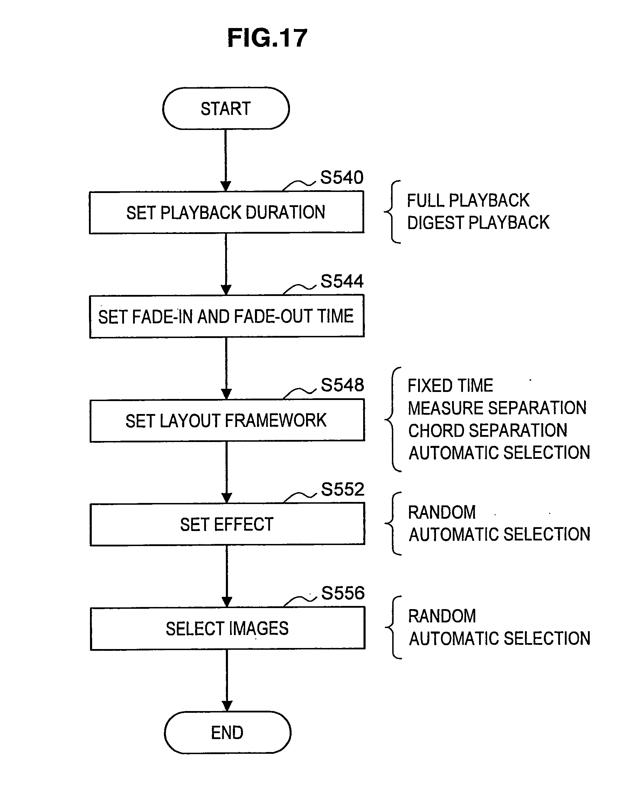

The PC21 starts a series of processing for creating a slideshow with music when the music analysis portion 428 acquires the music feature amount. The series of processing is schematically described hereinafter with reference to FIG. 17.

FIG. 17 is a flowchart schematically showing a series of processing to create a slideshow with music. First, as shown in FIG. 17, the playback duration of music is set by the playback duration setting portion 436 (S540). The playback duration may be a whole part of music or a highlight part of music, as described in detail later. Next, fade-in and fade-out time in the playback duration set by the playback duration setting portion 436 is set (S544).

After that, the layout control portion 440 separates the music playback duration into a plurality of image display frames; in other words, it sets a layout framework (S548). The music playback duration may be separated by a fixed time, separated for each measure, separated according to a chord change, or separated automatically, as described in detail later. Different images are displayed respectively on the image display frames obtained by the layout control portion 440.

Then, the layout control portion 440 sets how an image is displayed, which is an effect, for each image display frame (S552). The layout control portion 440 may set the effect for each image display frame randomly or by automatic selection based on the music feature amount, as described in detail later.

Further, the image selection mechanism 280 selects a necessary number of images for playback in the music playback duration (S556). For example, the image selection mechanism 280 may designate the number of images necessary for a slideshow during playback in the music playback duration as a selection number (the selection number designation portion 236) and select the selection number of images by the method described in the first embodiment.

Then, a slideshow is started, and the images selected by the image selection mechanism 280 are displayed in synchronization with the music data based on the image display frames and the effects set by the layout control portion 440. Each processing in the series of processing is described hereinafter in detail.

### (Setting of a playback duration: the function of the playback duration setting portion 436)

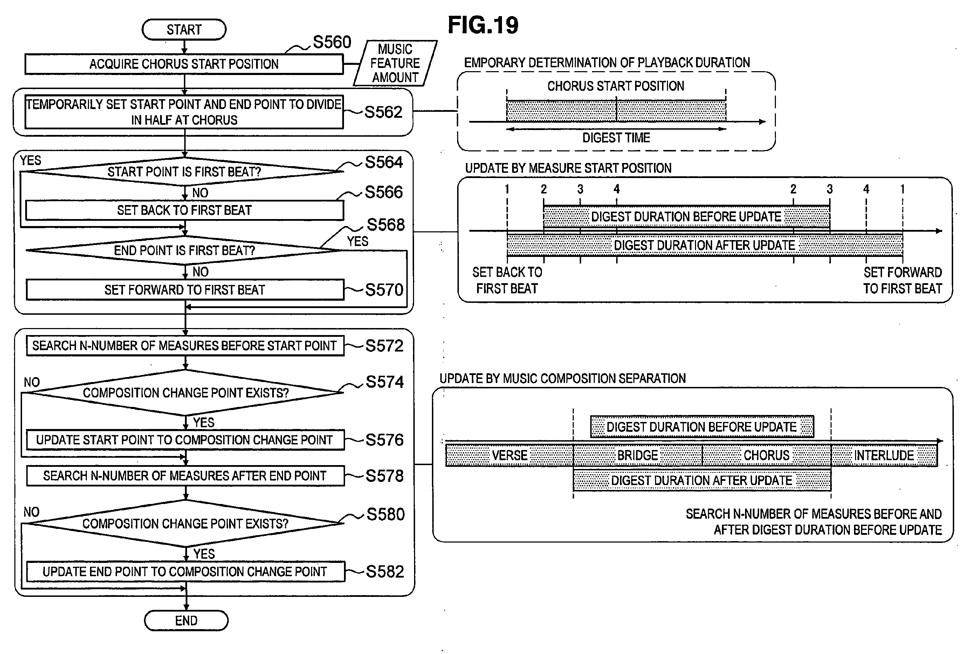

The playback duration of music is selectable from a whole part of music (full playback) or a highlight part of music (digest playback). Which of the whole part of music or the highlight part of music is selected as the playback duration may be selected by a user through the operation portion 448 or preset to the PC 21. The highlight part of music may be set by performing the processing shown in FIG. 19, for example, by the playback duration setting portion 436.

FIG. 19 is a flowchart showing the flow of processing to set a highlight part of music by the playback duration setting portion 436. As shown in FIG. 19, the playback duration setting portion 436 first acquires a chorus start position based on the music composition information stored in the music feature amount storage portion 432 (S560). Then, the playback duration setting portion 436 temporarily sets a start point and an end point in such a way that digest time is divided in half at the chorus start position as shown in the upper right part of FIG. 19 (S562).

Then, if the temporarily set start point is not the first beat (S564), the playback duration setting portion 436 sets the start point back to the first beat (S566) and, if the temporarily set end point is not the first beat (S568), it sets the end point forward to the first beat (S570). The middle right part of FIG. 19 shows an example in which the start point is set back to the first beat because the temporarily set start point is the second beat, and the end point is set forward to the first beat because the temporarily set end point is the third beat.

Further, the playback duration setting portion 436 searches the N-number (N≥1, e.g. N=4) of measures before the start point (S572), and if a composition change point at which the component of music changes exists (S574), updates the start point to the composition change point (S576). Likewise, the playback duration setting portion 436 searches the N-number (N≥1, e.g. N=4) of measures after the end point (S578), and if a composition change point at which the component of music changes exists (S580), updates the end point to the composition change point (S582). The lower right part of FIG. 19 shows an example in which the start point is updated to the composition change point because the composition change point from verse to bridge exists during N-number of measures before the start point prior to update, and the end point is updated to the composition change point because the composition change point from chorus to interlude exists during N-number of measures after the end point prior to update.

In this manner, the duration from the start point to the end point obtained by the playback duration setting portion 436 is set as the playback duration of digest playback. Although the case where the period of N-number of measures before the start point is searched in S572 is illustrated in FIG. 19, this embodiment is not limited thereto. For example, the playback duration setting portion 436 may include the N-number of measures after the start point as a search target period. Likewise, although the case where the period of N-number of measures after the end point is searched in S578 is illustrated, this embodiment is not limited thereto. For example, the playback duration setting portion 436 may include the N-number of measures before the end point as a search target period.

### (Setting of fade-in/fade-out time)

Fade-in time and fade-out time of the playback duration set by the playback duration setting portion 436 may be previously set to the PC 21 or may be set by a user operation through the operation portion 448. Further, when full playback, in which the playback duration is the whole part of music, is performed, fade-in time and fade-out time may be set longer than when digest playback is performed. For example, fade-in time and fade-out time may be about three seconds.

### (Layout framework: the function of the layout control portion 440)

The layout control portion 440 separates the music playback duration set by the playback duration setting portion 436 into a plurality of image display frames by the following method, for example.

### - Time fixation

This is the layout method that separates the music playback duration so as to switch images at regular time intervals, such as ten seconds, for example. In this method, the music feature amount is not particularly used.

### - Measure separation

This is the layout method that separates the music playback duration so as to switch images every certain number of measures. The layout control portion 440 can specify after how many milliseconds from the head of the playback duration images are to be switched based on the time when measures are switched, which is contained in the music progression information. Because the tune generally tends to change every four measures or eight measures in the music having four beats, the layout control portion 440 may separate the playback duration every four measures or every eight measures, for example.

### - Chord separation

This is the layout method that separates the music playback duration so as to switch images in synchronization with a change in chord progression. The layout control portion 440 can specify after how many milliseconds from the head of the playback duration images are to be switched based on the time when chords are switched, which is contained in the music progression information. For example, when the chord changes from C major to A minor after 1000 miliseconds from the head of the playback duration, the layout control portion 440 may separate the playback duration after 1000 miliseconds from the head of the playback duration. Because the playback duration is separated at regular intervals in the case of time fixation and measure separation, images are periodically switched in a slideshow. On the other hand, because the playback duration is separated at irregular intervals (one measure, two measures, one measure and two beats etc.) in the case of chord separation, the image switching period in a slideshow is not constant, thus enabling creation of a slideshow better matching the music flow.

### - Automatic layout according to mood

This is the layout method that separates the music playback duration according to a rule corresponding to the mood of music. The mood of music is determined by the mood determination portion 456 based on the music feature amount. This is described later in detail.

### (Setting of effects: the function of the layout control portion 440)

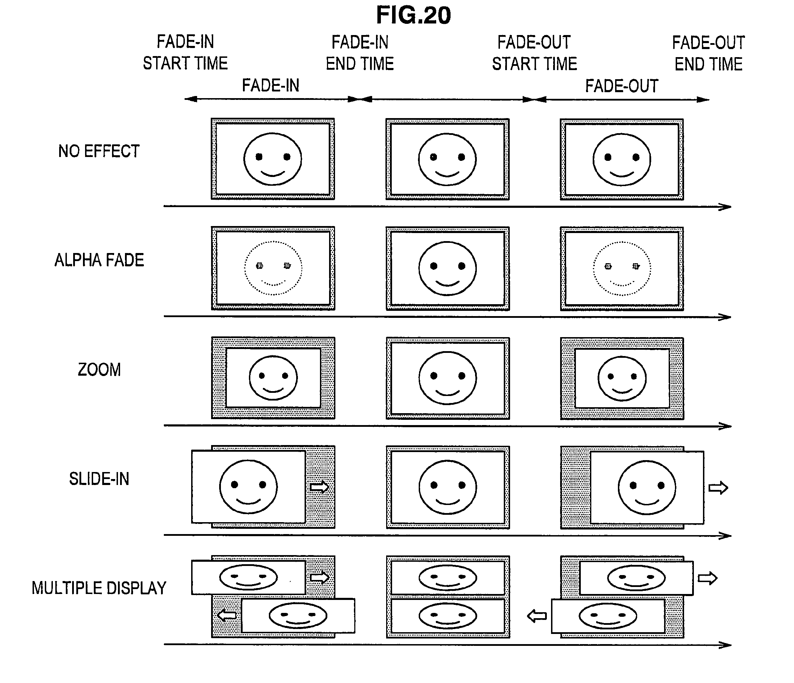

The layout control portion 440 sets in what animation an image is to be displayed, which is an effect, for each image display frame. Specifically, the layout control portion 440 sets an animation applied to the image at the start of image frame (which is referred to hereinafter as fade-in) and an animation applied to the image at the end of image frame (which is referred to hereinafter as fade-out). Specific examples of effect types are alpha fade (in/out), zoom (in/out), slide-in (top, bottom, left, right), multiple display slide-in (vertical split, horizontal split), sepia color and so on. Each effect type is described hereinafter with reference to FIG. 20.

FIG. 20 is an explanatory view showing a state from fade-in to fade-out for each effect type. As shown in FIG. 20, in the case of no effect, the same image is kept from fade-in to fade-out. In the case of alpha fade, the permeability gradually decreases and an image appears during fade-in, and the permeability gradually increases and an image disappears during fade-out. In the case of zoom, an image gradually becomes larger during fade-in, and an image gradually becomes smaller during fade-out. In the case of slide-in, an image moves from the outside of the display screen to the inside of the display screen during fade-in, and an image moves from the inside of the display screen to the outside of the display screen during fade-out. In the case of multiple display, slide-in, zoom, alpha fade or the like is applied to different images in each of a plurality of split screens.

Further, the layout control portion 440 sets fade-in start time, fade-in end time, fade-out start time, fade-out end time and so on as effect parameters, in addition to the effect types. The layout control portion 440 may set those effect parameters randomly or according to a rule corresponding to the mood of music. The details about the method using the mood of music are described later.

### (Selection of images)

By the above-described processing, the music playback duration, the layout framework and the effect applied to each image display frame are set. The image selection mechanism 280 selects the images to be placed on the respective image display frames in the layout and performs processing for completing a slideshow.

For example, the image selection mechanism 280 extracts a necessary number of photographs for a slideshow from a large number of sets of images, such as sets of images in an arbitrary folder, as described in the first embodiment, thereby creating a non-boring slideshow.

Further, it is feasible to identify the number of faces contained in each image using a facial recognition technique disclosed in Japanese Unexamined Patent Publication No. 2007-79894, for example, and add it to image-related information, in addition to an image ID (contents management ID), shooting time, an image feature amount and so on. In this case, the layout control portion 440 may make arrangement in such a way that the image containing the largest number of faces among the images selected by the image selection mechanism 280 is displayed in the last image display frame. Specifically, it may place the image containing the largest number of faces in the last image display frame and shifts the positions of the other images forward, or may replace the image in the last image display frame with the image containing the largest number of faces. In this configuration, it is possible to display a group photograph, for example, which is suitable as a representative photograph in the last place and end the slideshow.

### (Setting management portion 452)

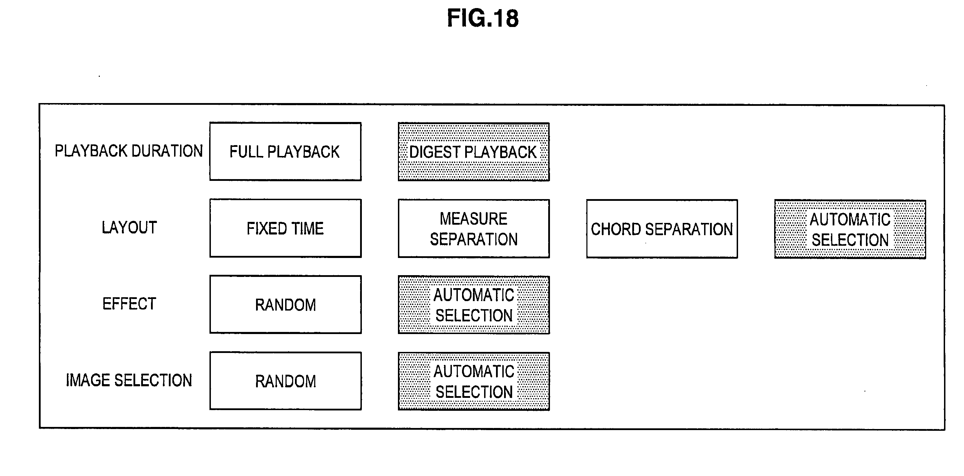

As described earlier, there are several options for a specific method which is used to implement each processing. The specific method to be used may be managed by the setting management portion 452. Further, the setting management portion 452 may set the specific method to use based on a user operation in a configuration dialog shown in FIG. 18.

FIG. 18 is an explanatory view showing an exemplary composition of a configuration dialog. As shown in FIG. 18, the configuration dialog contains displays indicating options of a specific method for the playback duration, the layout, the effect and the image selection. In the example shown in FIG. 18, digest playback is selected for the playback duration, and automatic selection is selected respectively for the layout, the effect and the image selection. The playback duration setting portion 436, the layout control portion 440 and the image selection mechanism 280 may operate according to the information that is managed by the setting management portion 452 in this manner.

### (Automatic selection of a layout and an effect according to mood)

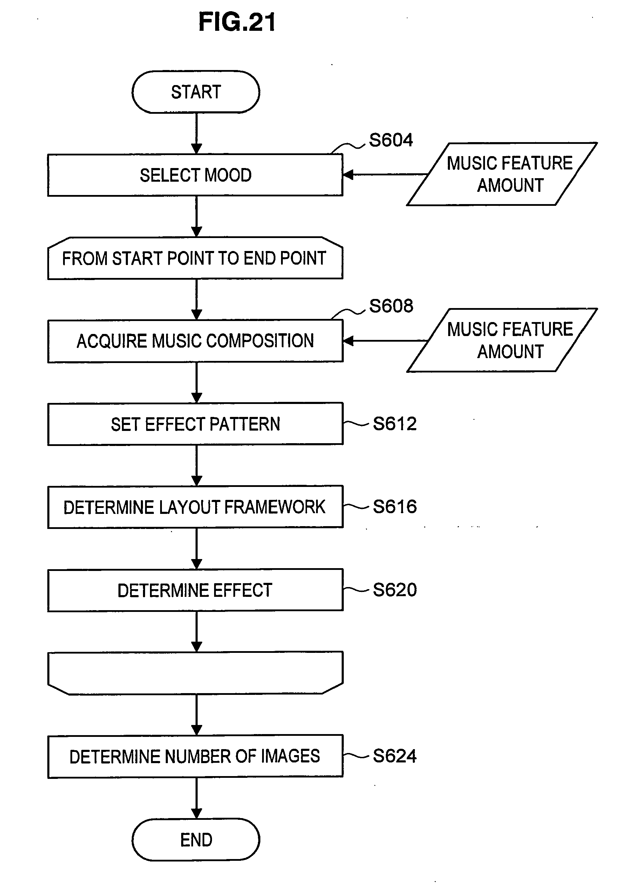

Automatic selection of a layout and an effect according to mood (automatic selection of a display pattern) is described hereinafter with reference to FIGS. 21 to 25.

Fig. 21 is a flowchart showing the flow of automatic selection of a layout and an effect according to mood. First, as shown in FIG. 21, the mood determination portion 456 determines mood (tune) of music based on the music feature amount stored in the music feature amount storage portion 432. The mood determination portion 456 may perform the mood determination with use of the algorism of "automatic selection channel" used in PlayStation3 (registered trademark), for example. Further, the mood of music may represent the atmosphere of music, an abstract theme (climate, place, season, feeling, event) recalled by music and so on. The following description is based on the assumption that the mood determination portion 456 determines the mood of music as any one of Active, Relaxing, Ballad, Acoustic or Electronic. If music corresponds to a plurality of moods, the mood determination portion 456 may select one mood according to a given priority. A higher priority may be given to the mood to which music is not statistically likely to correspond, and the lowest priority may be given to Ballad, and higher priority may be given to Relaxing, Active, Electronic and Acoustic in this order, for example.

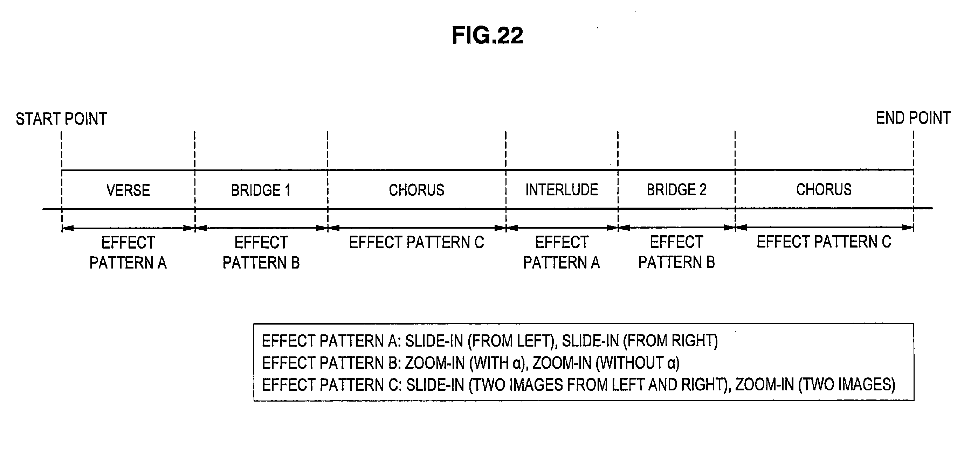

After the mood of music is determined by the mood determination portion 456, the layout control portion 440 acquires music composition information (S608), separates the playback duration into one or two or more logic durations based on the music composition information and the music mood, and selects an effect pattern for each logic duration (S612). For example, the layout control portion 440 may select the effect pattern as shown in FIG. 22 for each logic duration.

FIG. 22 is an explanatory view showing an example of selection of effect patterns. In the example shown in FIG. 22, the playback duration is separated into logic durations for each component of the music, and an effect pattern A is set to verse, an effect pattern B is set to bridge, and an effect pattern C is set to chorus. Each effect pattern includes a plurality of effect types. Further, visual effects to a user is higher in order of the effect pattern A (low), the effect pattern B (intermediate) and the effect pattern C (high).

Then, the layout control portion 440 determines the layout framework of each logic duration (S616). Specifically, the layout control portion 440 separates each logic duration into a plurality of image display frames.

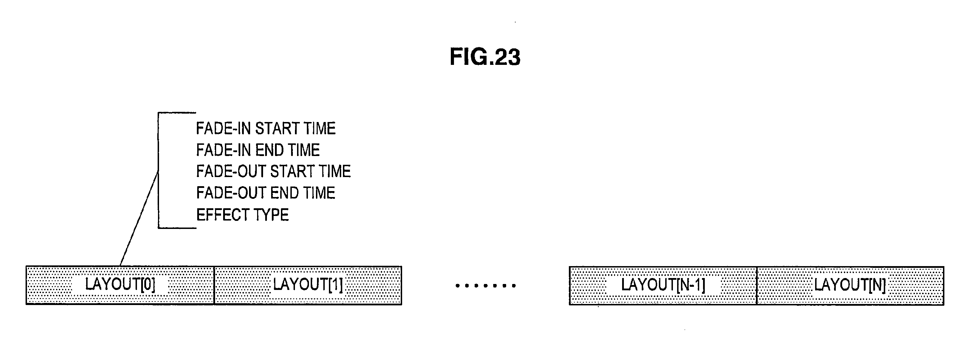

After that, the layout control portion 440 sets the effect type of each image display frame included in the logic duration to any of the effect pattern included in the effect patterns of the logic duration (S620). Further, the layout control portion 440 sets the effect parameters other than the effect type for each image display frame as shown in FIG. 23. FIG. 23 is an explanatory view showing the way that the effect parameter is set to each image display frame. The layouts [0] to [N] shown in FIG. 23 correspond to the respective image display frames, and fade-in start time, fade-in end time, fade-out start time, fade-out end time and an effect type are set to each image display frame.

Then, after the processing of all logic durations ends, the image selection mechanism 280 can determine a necessary number of images for a slideshow (S624).

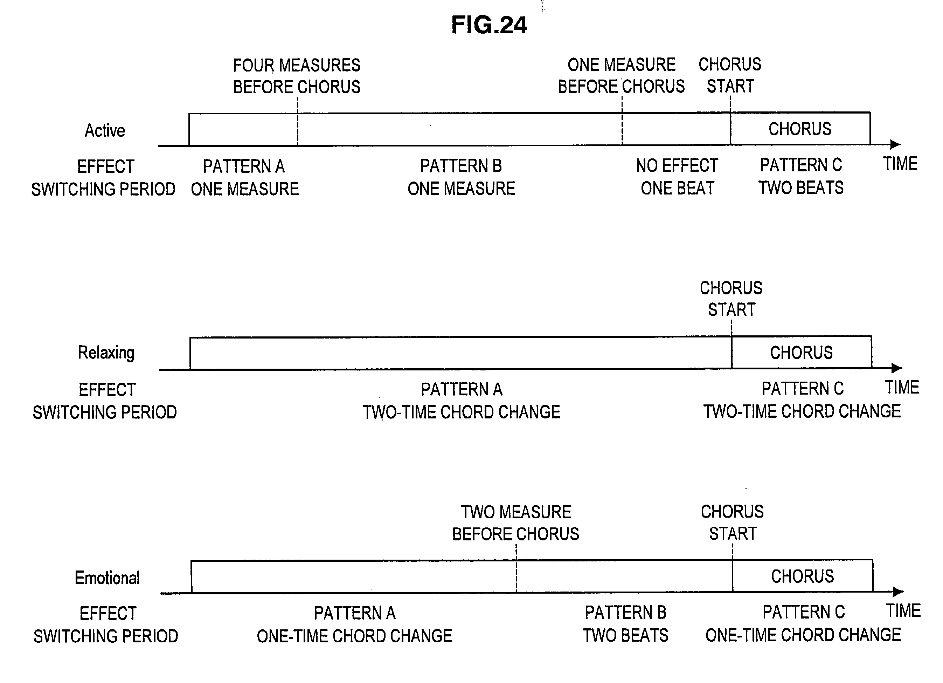

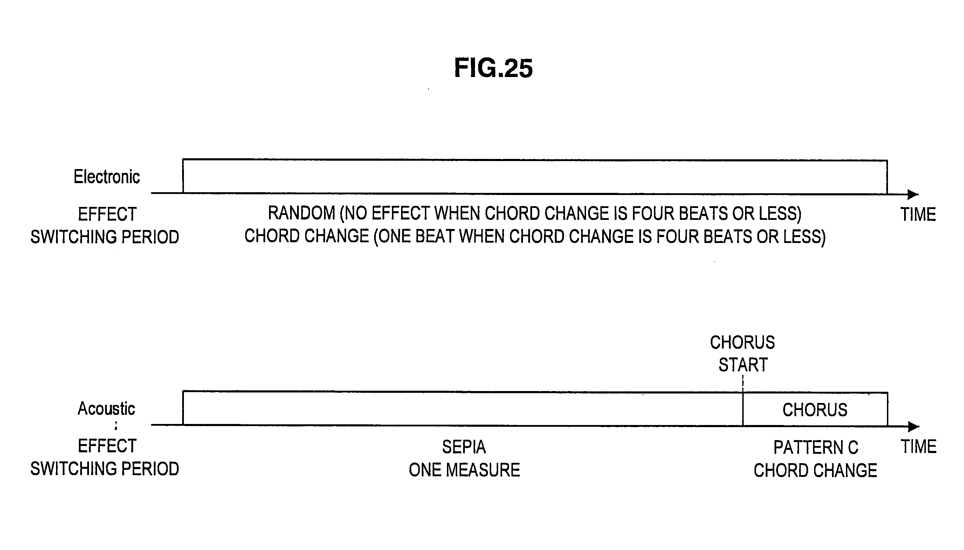

In the foregoing, the case where the playback duration is separated into logic durations in units of components of music (verse, bridge, etc.) is described. In such a case, it is possible to implement effects and switching of images in accordance with the melody being played back. On the other hand, in this embodiment, the playback duration may be separated into a plurality of logic durations relative to a chorus start position as shown in FIGS. 24 and 25.

FIGS. 24 and 25 are explanatory views showing an example of setting of a layout and an effect for each mood. The switching period shown in FIGS. 24 and 25 indicate the period when images are switched, which is, the period of the image display frame. As shown in FIG. 24, when the mood is Active, the playback duration is separated at the position of four measures before chorus, the position of one measure before chorus and the chorus start position, the switching period is short, and a variety of effect patterns are set.

Further, as shown in FIG. 24, when the mood is Relaxing, the playback duration is separated at the chorus start position, the switching period is rather long, and alpha fade is used a lot. Furthermore, as shown in FIG. 24, when the mood is Emotional, the playback duration is separated at the position of two measures before chorus and the chorus start position, the switching period is rather long, and zoom is used a lot. As shown in FIG. 25, when the mood is Electronic, the images are basically switched according to a chord change, and the effects are set randomly. On the other hand, when a chord change is four beats or less, the images are switched every beat, and no effect is applied. Further, as shown in FIG. 25, when the mood is Acoustic, the playback duration is separated at the chorus start position, the switching period is rather long, and sepia color is applied to the part other than chorus.

As described above, by separating the playback duration into a plurality of logic durations with respect to the chorus start position, it is possible to create a slideshow which becomes more impressive (visual effects become more significant) as the music playback position gets closer to chorus.

### (4-3) Supplemental explanation to the second embodiment

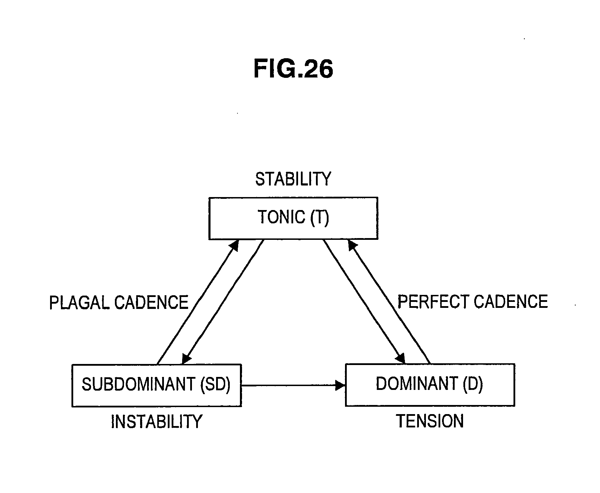

Although the case where the playback duration or the logic duration is separated into image display frames based on beats, measures, chord changes or the like is described in the second embodiment described above, this embodiment is not limited thereto. An alternative example of the second embodiment is described hereinafter with reference to FIG. 26.

FIG. 26 is an explanatory view showing the relationship of dominants in music progression. As shown in FIG. 26, music is composed of dominants such as stable tonic, tense dominant and unstable subdominant. The dominants have the relationship as shown in FIG. 26. Thus, the layout control portion 440 may separate the playback duration or the logic duration into image display frames based on the dominants as follows, for example.

### - Image display frame: tonic - dominant - tonic

### Effect: fade-in - stationary - fade-out

One image display frame is composed of tonic - dominant - tonic, and the fade-in effect is set to tonic, the stationary effect is set to dominant, and the fade-out effect is set to the subsequent tonic.

### - Image display frame: tonic - subdominant - dominant - tonic Effect: fade-in - zoom-in - stationary - fade-out

One image display frame is composed of tonic subdominant - dominant - tonic, and the fade-in effect is set to tonic, the zoom-in effect is set to subdominant, the stationary effect is set to dominant, and the fade-out effect is set to the subsequent tonic.

### - Image display frame: tonic - subdominant - tonic

### Effect: fade-in - zoom-in - fade-out

One image display frame is composed of tonic - subdominant - tonic, and the fade-in effect is set to tonic, the zoom-in effect is set to dominant, and the fade-out effect is set to the subsequent tonic.

In this manner, by separating the playback duration into dominant units and synchronizing a change in dominant with a change in effect, it is possible to automatically create a slide show further matching music.

Further, the layout control portion 440 may separate the playback duration by chord in such a way that fade-in ends at a chord change point.

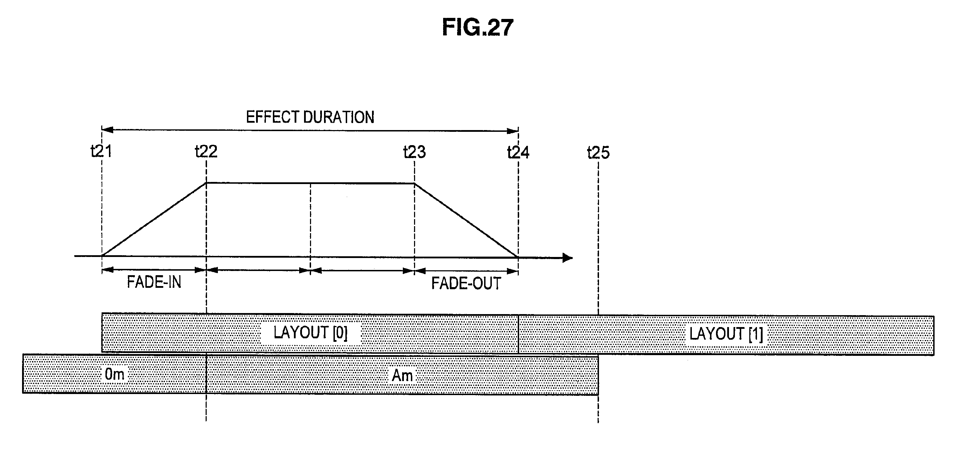

FIG. 27 is an explanatory view showing the relationship between a chord change point and an image display frame. As shown in FIG. 27, consider the case where the image display frame is separated based on a chord change point from C minor to A major. In this case, the layout control portion 440 separates the image display frame so that t21 comes at the head in order that fade-in ends at a chord change point t22 from C minor to A major. Likewise, it is necessary to set t24 as the head of the next image display frame in order that fade-in of the next image ends at a chord change point t25 from A major to the next chord. Thus, the layout control portion 440 sets t23 as fade-out start time in order that fade-out ends at t24.

If fade-in is set to start at a chord change point, the image effect starts after the chord changes, which can give a user the impression that the image is behind music. On the other hand, by separating the image display frame in such a way that fade-in ends at a chord change point as described above, it is possible to give a user the impression that the image and music match better.

### (5) Summary

As described in the foregoing, in the PC 20 according to the first embodiment, because the similarity determination and selection portion 256 makes image selection based on the feature amount of each image, it can select the images with a relatively low degree of similarity, for example, from a plurality of images. On the other hand, because the similarity determination and selection portion 256 makes image selection based on the feature amount of each image as described above, a processing load on the similarity determination and selection portion 256 becomes excessive as the number of selection target images or the final selection number increases. In light of this, if the final selection number is larger than the final number criterion value γ, the selection control portion 240 causes the random selection portion 258, not the similarity determination and selection portion 256, to perform image selection, thereby reducing a processing load for image selection in the PC 20. Thus, in the PC 20, the random selection portion 258 performs image selection when the final selection number is larger than the final number criterion value γ so as to reduce a processing load, and the similarity determination and selection portion 256 performs image selection when the final selection number is smaller than the final number criterion value γ so as to select images by taking similarity into account.

Although preferred embodiments of the present invention are described with reference to the drawings, the present invention is not restricted to the above-described embodiments. It will be obvious to those skilled in the art that various changes and modifications may be made without departing from the scope of the invention, which are intended for inclusion within the scope of the present invention.

For example, it is not necessary to perform each step in the processing of the PC 20 or the PC 21 in this specification in chronological order according to the sequence shown in the flowchart. For example, each step in the processing of the PC 20 or the PC 21 may include processing that is executed in parallel or individually (e.g. parallel processing or object processing).

Further, although FIG. 13 illustrates the case where the selection control portion 240 causes the random selection portion 258 to perform image selection when it determines that N>γ in S320, the present invention is not limited thereto. For example, the selection control portion 240 may cause a selection portion which has an arbitrary image selection function with a smaller operation amount than the similarity determination and selection portion 256 to perform image selection when it determines that N>γ in S320.

Furthermore, it is possible to create a computer program that causes the hardware such as the CPU 201, the ROM 202 or the RAM 203 which are built in the PC 20 or the PC 21 to perform the equal function to the elements of the PC 20 or the PC21 described above. Further, a storage medium which stores such a computer program may be provided. Furthermore, each functional block which is shown in the functional block diagram of FIG. 5 or FIG. 14 may be implemented by hardware, thereby achieving the series of processing on hardware.

## Claims

1. An image selection apparatus comprising:
a selection number designation portion to designate a selection number of images;
an image analysis portion to analyze a plurality of images and extract a feature amount of each image;
a first selection portion to select at least the selection number of images from the plurality of images based on the feature amount of each image extracted by the image analysis portion;
a second selection portion to select images from the plurality of images by a given method different from a method of the first selection portion; and
a selection control portion to cause the second selection portion, rather than the first selection portion, to select images if the selection number is larger than a first set number.

2. The image selection apparatus according to claim 1, wherein
if the selection number is smaller than the first set number, the selection control portion causes the first selection portion to select at least the selection number of images and then causes the second selection portion to select the selection number of images from at least the selection number of images.

3. The image selection apparatus according to claim 2, wherein
the second selection portion randomly selects the selection number of images from at least the selection number of images.

4. The image selection apparatus according to claim 3, wherein
the first selection portion selects images in a number designated based on the selection number and a prescribed index from the plurality of images.

5. The image selection apparatus according to claim 1, further comprising:
a third selection portion to classify a prescribed set of images into groups composed of images whose shooting time interval is shorter than a set interval value and select at least one image from each of the groups, wherein
the plurality of images are included in a set of images selected by the third selection portion.

6. The image selection apparatus according to claim 5, further comprising:
a fourth selection portion to classify the set of images selected by the third selection portion into a plurality of groups according to dispersion of shooting time of each image included in the set of images and select at least one image from each of the groups as the plurality of images.

7. The image selection apparatus according to claim 6, wherein
if the number of images included in the set of images selected by the third selection portion is larger than a second set number, the selection control portion causes the second selection portion, rather than the fourth selection portion, to select images.

8. The image selection apparatus according to claim 6, wherein
if the number of images included in the set of images selected by the third selection portion is smaller than a number designated based on the selection number and a prescribed index, the selection control portion causes the first selection portion to select the selection number of images from the images included in the set of images selected by the third selection portion.

9. The image selection apparatus according to claim 1, further comprising:
a music playback portion to play back music;
a layout control portion to set a display pattern of an image for each of one or two or more durations forming music;
an image display portion to display an image; and
a display control portion to cause images selected based on control by the selection control portion to be displayed sequentially according to the display pattern set to a duration including a music playback position by the music playback portion.

10. The image selection apparatus according to claim 9, wherein
the layout control portion separates the music into one or two or more durations according to a rule corresponding to mood of the music, and sets a display pattern corresponding to mood of the music to the one or two or more durations.

11. The image selection apparatus according to claim 9, wherein
the layout control portion places an image containing the largest number of faces in the last place among the images selected based on control by the selection control portion.

12. The image selection apparatus according to claim 9, further comprising:
a playback duration setting portion to set a playback duration of music, wherein
the selection number designation portion designates the selection number of images based on the number of images necessary for display during playback in the playback duration.

13. The image selection apparatus according to claim 9, wherein
the playback duration setting portion temporarily sets a duration with its center at a start position of an impressive part of music, and
if a start point and an end point of the duration are not the first beat, the playback duration setting portion extends the start point and the end point respectively back and forward to the first beat and sets the playback duration.

14. The image selection apparatus according to claim 13, wherein
if a composition change point at which a component of music changes exists in a given range from the start point or a given range from the end point, the playback duration setting portion further updates the start point or the end point to the composition change point and sets the playback duration.

15. The image selection apparatus according to claim 9, wherein
the display pattern includes at least one of switching timing of images and an effect applied to an image.

16. The image selection apparatus according to claim 9, wherein
when switching images based on chord progression of music, the layout control portion makes control in such a way that fade-in of an image ends at a chord change point.

17. An image selection method comprising:
a step of designating a selection number of images;
a step of determining whether the selection number is larger than a first set number;
if the selection number is determined to be smaller than the first set number, a step of analyzing a plurality of images to extract a feature amount of each image and selecting at least the selection number of images from the plurality of images based on the feature amount of each image; and
if the selection number is determined to be larger than the first set number, a step of selecting images from the plurality of images by another given method without using the feature amount of each amount.

18. A program for causing a computer to function as an image selection apparatus comprising:
a selection number designation portion to designate a selection number of images;
an image analysis portion to analyze a plurality of images and extract a feature amount of each image;
a first selection portion to select at least the selection number of images from the plurality of images based on the feature amount of each image extracted by the image analysis portion;
a second selection portion to select images from the plurality of images by a given method different from a method of the first selection portion; and
a selection control portion to cause the second selection portion, rather than the first selection portion, to select images if the selection number is larger than a first set number.
